# EUROPEAN PATENT APPLICATION

(11) **EP 4 827 202 A1**
(43) Date of publication of application: **21.10.2026**
(21) Application number: 24916659.6
(22) Date of filing: 13.12.2024
(51) Int. Cl.: H04W 72/0453

(54) **COMMUNICATION METHOD AND APPARATUS**

(30) Priority: 12.01.2024 CN 202410058288
(71) Applicant: Huawei Technologies Co., Ltd., Shenzhen, Guangdong 518129 (CN)
(72) Inventor: YU, Jian, Shenzhen, Guangdong 518129 (CN); GONG, Bo, Shenzhen, Guangdong 518129 (CN); GAN, Ming, Shenzhen, Guangdong 518129 (CN)
(74) Representative: Huawei European IPR
(86) International application number: PCT/CN2024/139205
(87) International publication number: WO 2025/148612

(57) **Abstract**

This application relates to a communication method and apparatus. A first apparatus generates a first PPDU. The first apparatus sends the first PPDU. A frequency domain resource corresponding to a first PPDU bandwidth includes a frequency domain resource corresponding to a reference bandwidth, the frequency domain resource corresponding to the reference bandwidth is located at an edge of the frequency domain resource corresponding to the first PPDU bandwidth, and the reference bandwidth is less than the first PPDU bandwidth. A transmit power of the first PPDU on each subcarrier of M subcarriers is less than or equal to a first threshold, and the M subcarriers belong to guard tones corresponding to the first PPDU bandwidth but do not belong to the guard tones corresponding to the reference bandwidth. The M subcarriers function similar to guard tones, so that the guard tones corresponding to the reference bandwidth can meet a requirement of a tone plan corresponding to the first PPDU bandwidth.

## Description

### CROSS-REFERENCE TO RELATED APPLICATIONS

This application claims priority to Chinese Patent Application No. 202410058288.1, filed with the China National Intellectual Property Administration on January 12, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Regarding a 6 GHz spectrum, a low power indoor (low power indoor, LPI) communication mode has been defined currently. In this communication mode, a transmit power of a device is limited by both a maximum power and a maximum power spectral density. For example, the transmit power of the device cannot exceed a set maximum power, and a power spectral density for transmission by the device also cannot exceed a set maximum power spectral density. As a result, the transmit power of the device is greatly limited.

To increase the transmit power of the device, a design of a distributed resource unit (distributed resource unit, DRU) is further proposed currently. To be specific, contiguous subcarriers included in a regular resource unit (regular resource unit, rRU) are distributed to an entire transmission bandwidth, to increase the transmit power of the device. However, a DRU is not always distributed across the entire transmission bandwidth. For example, if a physical layer protocol data unit (PHY protocol data unit, PPDU) has puncturing, that is, no data is transmitted on a part of sub-channels corresponding to a PPDU bandwidth (PPDU bandwidth), subcarriers of the DRU cannot be distributed on the PPDU bandwidth, but can be distributed only on two sides of the puncturing separately. In this case, a distributed bandwidth (distributed bandwidth, DBW) of the DRU is smaller than the PPDU bandwidth. For another example, there are some devices (for example, an internet of things (internet of things, IoT) device) that support only a bandwidth of 20 MHz. Such devices can be distributed only in a distributed bandwidth of 20 MHz, and the PPDU bandwidth may be greater than 20 MHz, that is, the PPDU bandwidth is greater than the distributed bandwidth of the DRU. For another example, if some devices do not support the DRU, but some other devices support the DRU, these devices may perform hybrid transmission on a relatively large PPDU bandwidth, and the PPDU bandwidth may be greater than the distributed bandwidth of the DRU.

When the PPDU bandwidth is greater than the distributed bandwidth of the DRU, how to meet a requirement of a tone plan (tone plan) corresponding to the PPDU bandwidth is an urgent problem to be resolved.

### SUMMARY

Embodiments of this application provide a communication method and apparatus, to enable a guard tone (guard tone) corresponding to a reference bandwidth to meet a requirement of a tone plan corresponding to a PPDU bandwidth. For example, the reference bandwidth is equal to a distributed bandwidth of a DRU, which is equivalent to that a guard tone corresponding to the distributed bandwidth of the DRU can meet the requirement of the tone plan corresponding to the PPDU bandwidth.

According to a first aspect, a first communication method is provided. The method may be performed by a first apparatus. The first apparatus is, for example, an access point device (for example, an AP) or a chip system, and the chip system can implement a function of the access point device. Alternatively, the first apparatus is, for example, a station device (for example, a STA) or a chip system, and the chip system can implement a function of the station device. The method includes: generating a first PPDU; and sending the first PPDU. A frequency domain resource corresponding to a first PPDU bandwidth includes a frequency domain resource corresponding to a reference bandwidth, the frequency domain resource corresponding to the reference bandwidth is located at an edge of the frequency domain resource corresponding to the first PPDU bandwidth, and the reference bandwidth is less than the first PPDU bandwidth, where a transmit power of the first PPDU on each of M subcarriers is less than or equal to a first threshold, the M subcarriers belong to guard tones corresponding to the first PPDU bandwidth and do not belong to guard tones corresponding to the reference bandwidth, and M is a positive integer. The first PPDU bandwidth is, for example, a bandwidth of the first PPDU.

According to a second aspect, a second communication method is provided. The method may be performed by a second apparatus. The second apparatus is, for example, an access point device (for example, an AP) or a chip system, and the chip system can implement a function of the access point device. Alternatively, the second apparatus is, for example, a station device (for example, a STA) or a chip system, and the chip system can implement a function of the station device. The method includes: receiving a first PPDU. A frequency domain resource corresponding to a first PPDU bandwidth includes a frequency domain resource corresponding to a reference bandwidth, the frequency domain resource corresponding to the reference bandwidth is located at an edge of the frequency domain resource corresponding to the first PPDU bandwidth, and the reference bandwidth is less than the first PPDU bandwidth, where a transmit power of the first PPDU on each of M subcarriers is less than or equal to a first threshold, the M subcarriers belong to guard tones corresponding to the first PPDU bandwidth and do not belong to guard tones corresponding to the reference bandwidth, and M is a positive integer. The first PPDU bandwidth is, for example, a bandwidth of the first PPDU.

In this embodiment of this application, the M subcarriers belong to the guard tones corresponding to the first PPDU bandwidth but do not belong to the guard tones corresponding to the reference bandwidth, and transmit powers of the first PPDU on the M subcarriers are less than or equal to the first threshold. For example, it is understood as that although for the reference bandwidth, the M subcarriers do not belong to the guard tones corresponding to the reference bandwidth, the transmit powers of the first PPDU on the M subcarriers are relatively small, that is, the M subcarriers may be similar to implementing functions of guard tones. Therefore, the guard tones corresponding to the reference bandwidth are enabled to meet a requirement of a tone plan (tone plan) corresponding to the first PPDU bandwidth. The reference bandwidth is, for example, equal to a distributed bandwidth of a DRU, which is equivalent to that a guard tone corresponding to the distributed bandwidth of the DRU can meet the requirement of the tone plan corresponding to the first PPDU bandwidth.

With reference to the first aspect or the second aspect, in an optional implementation, the frequency domain resource corresponding to the reference bandwidth includes a DRU. For example, the reference bandwidth is the distributed bandwidth of the DRU.

With reference to the first aspect or the second aspect, in an optional implementation, the reference bandwidth is 20 MHz; and the first PPDU bandwidth is 40 MHz, 80 MHz, 160 MHz, or 320 MHz. Alternatively, the reference bandwidth may be greater than 20 MHz, and/or the first PPDU bandwidth may be greater than 320 MHz. This is not limited.

With reference to the first aspect or the second aspect, in an optional implementation, M is less than or equal to 6. In an example in which the first PPDU bandwidth is 80 MHz and the reference bandwidth is 20 MHz, a low frequency edge corresponding to the first PPDU bandwidth may include 12 guard tones, and a high frequency edge corresponding to the first PPDU bandwidth may include 11 guard tones; and a low frequency edge corresponding to a bandwidth of the DRU may include six guard tones, and a high frequency edge corresponding to the bandwidth of the DRU may include five guard tones. For example, if the DRU is located at a high frequency edge of the first PPDU, six guard tones at the high frequency edge belong to the guard tones corresponding to the first PPDU bandwidth but do not belong to the guard tones corresponding to the reference bandwidth. In this case, in this embodiment of this application, a part or all of the six subcarriers may be used as the M subcarriers. For another example, if the DRU is located at a low frequency edge of the first PPDU, six guard tones at the low frequency edge belong to the guard tones corresponding to the first PPDU bandwidth but do not belong to the guard tones corresponding to the reference bandwidth. In this case, in this embodiment of this application, a part or all of the six subcarriers may be used as the M subcarriers. It may be understood as that, in this embodiment of this application, the M subcarriers are used to supplement the guard tones corresponding to the reference bandwidth as much as possible, so that the guard tones corresponding to the reference bandwidth are consistent with the guard tones corresponding to the first PPDU bandwidth as much as possible, and the guard tones corresponding to the reference bandwidth are enabled to meet a requirement of a spectrum template corresponding to the first PPDU bandwidth.

With reference to the first aspect or the second aspect, in an optional implementation, a highest frequency corresponding to the reference bandwidth is the same as a highest frequency corresponding to the first PPDU bandwidth; or, a lowest frequency corresponding to the reference bandwidth is the same as a lowest frequency corresponding to the first PPDU bandwidth. For example, if the frequency domain resource corresponding to the reference bandwidth is located at a high frequency edge of the frequency domain resource corresponding to the first PPDU bandwidth, the highest frequency corresponding to the reference bandwidth may be the same as the highest frequency corresponding to the first PPDU bandwidth. For another example, if the frequency domain resource corresponding to the reference bandwidth is located at a low frequency edge of the frequency domain resource corresponding to the first PPDU bandwidth, the lowest frequency corresponding to the reference bandwidth may be the same as the lowest frequency corresponding to the first PPDU bandwidth.

With reference to the first aspect or the second aspect, in an optional implementation, transmit powers of the first PPDU on different subcarriers in the M subcarriers are equal; or, a transmit power of the first PPDU on a first subcarrier in the M subcarriers is inversely proportional to or negatively correlated with a frequency difference between a frequency of the first subcarrier and a center frequency of the reference bandwidth. The transmit powers of the first PPDU on different subcarriers in the M subcarriers may be equal, so that implementation of the first apparatus and the second apparatus can be simplified. Alternatively, in the M subcarriers, a subcarrier with a larger frequency difference between a frequency of the subcarrier and the center frequency of the reference bandwidth is closer to an outer side of the first PPDU bandwidth, so that transmit powers on these subcarriers are relatively low, and out-of-band leakage can be better reduced. However, a subcarrier with a larger frequency difference between a frequency of the subcarrier and the center frequency of the reference bandwidth is farther away from the outer side of the first PPDU bandwidth, so that transmit powers on these subcarriers are relatively high, thereby increasing resources used for sending data.

With reference to the first aspect or the second aspect, in an optional implementation, the transmit powers of the first PPDU on the M subcarriers are equal to the first threshold, and the first threshold is 0. In this case, the M subcarriers are equivalent to implementing functions of the guard tones, and out-of-band leakage can be reduced. In this manner, a quantity and distribution of guard tones corresponding to a PPDU bandwidth when the PPDU bandwidth is equal to the reference bandwidth better meet the spectrum template corresponding to the first PPDU bandwidth.

According to a third aspect, a third communication method is provided. The method may be performed by a first apparatus. The first apparatus is, for example, an access point device (for example, an AP) or a chip system, and the chip system can implement a function of the access point device. Alternatively, the first apparatus is, for example, a station device (for example, a STA) or a chip system, and the chip system can implement a function of the station device. The method includes: generating a first PPDU; and sending the first PPDU. A frequency domain resource corresponding to a first PPDU bandwidth includes a DRU, the DRU is located at an edge of the frequency domain resource corresponding to the first PPDU bandwidth, and a distributed bandwidth of the DRU is less than the first PPDU bandwidth, where the distributed bandwidth of the DRU corresponds to Q guard tones, Q is the same as a quantity of guard tones corresponding to the first PPDU bandwidth, and Q is a positive integer. The first PPDU bandwidth is, for example, a bandwidth of the first PPDU.

According to a fourth aspect, a fourth communication method is provided. The method may be performed by a second apparatus. The second apparatus is, for example, an access point device (for example, an AP) or a chip system, and the chip system can implement a function of the access point device. Alternatively, the second apparatus is, for example, a station device (for example, a STA) or a chip system, and the chip system can implement a function of the station device. The method includes: receiving a first PPDU. A frequency domain resource corresponding to a first PPDU bandwidth includes a DRU, the DRU is located at an edge of the frequency domain resource corresponding to the first PPDU bandwidth, and a distributed bandwidth of the DRU is less than the first PPDU bandwidth, where the distributed bandwidth of the DRU corresponds to Q guard tones, Q is the same as a quantity of guard tones corresponding to the first PPDU bandwidth, and Q is a positive integer. The first PPDU bandwidth is, for example, a bandwidth of the first PPDU.

In this embodiment of this application, although the distributed bandwidth of the DRU is less than the first PPDU bandwidth, the quantity of guard tones corresponding to the distributed bandwidth of the DRU may be the same as the quantity of guard tones corresponding to the first PPDU bandwidth, so that the guard tones corresponding to the distributed bandwidth can meet a requirement of a tone plan corresponding to the first PPDU bandwidth.

With reference to the third aspect or the fourth aspect, in an optional implementation, the distributed bandwidth of the DRU is 20 MHz; and the first PPDU bandwidth is 40 MHz, 80 MHz, 160 MHz, or 320 MHz.

With reference to the third aspect or the fourth aspect, in an optional implementation, M is less than or equal to 6.

With reference to the third aspect or the fourth aspect, in an optional implementation, a highest frequency corresponding to the distributed bandwidth of the DRU is the same as a highest frequency corresponding to the first PPDU bandwidth; or, a lowest frequency corresponding to the distributed bandwidth of the DRU is the same as a lowest frequency corresponding to the first PPDU bandwidth.

With reference to the third aspect or the fourth aspect, in an optional implementation, transmit powers of the first PPDU on the Q subcarriers are less than or equal to a first threshold.

With reference to the third aspect or the fourth aspect, in an optional implementation, transmit powers of the first PPDU on different subcarriers in the Q subcarriers are equal; or, a transmit power of the first PPDU on a first subcarrier in the Q subcarriers is inversely proportional to or negatively correlated with a frequency difference between a frequency of the first subcarrier and a center frequency of the reference bandwidth.

With reference to the third aspect or the fourth aspect, in an optional implementation, the transmit powers of the first PPDU on the Q subcarriers are equal to the first threshold, and the first threshold is 0.

For technical effects brought by various optional implementations of the third aspect or the fourth aspect, refer to descriptions of the technical effects of corresponding implementations of the first aspect or the second aspect.

According to a fifth aspect, a fifth communication method is provided. The method may be performed by a first apparatus. The first apparatus is, for example, an access point device (for example, an AP) or a chip system, and the chip system can implement a function of the access point device. Alternatively, the first apparatus is, for example, a station device (for example, a STA) or a chip system, and the chip system can implement a function of the station device. The method includes: generating a first PPDU; and sending the first PPDU. A frequency domain resource corresponding to a first PPDU bandwidth includes a DRU, and a distributed bandwidth of the DRU is less than the first PPDU bandwidth, where a transmit power of the first PPDU on each of N subcarriers is less than or equal to a second threshold, the N subcarriers are located in a frequency range of a center frequency of the distributed bandwidth of the DRU, and N is a positive integer. The first PPDU bandwidth is, for example, a bandwidth of the first PPDU.

According to a sixth aspect, a sixth communication method is provided. The method may be performed by a second apparatus. The second apparatus is, for example, an access point device (for example, an AP) or a chip system, and the chip system can implement a function of the access point device. Alternatively, the second apparatus is, for example, a station device (for example, a STA) or a chip system, and the chip system can implement a function of the station device. The method includes: receiving a first PPDU. A frequency domain resource corresponding to a first PPDU bandwidth includes a DRU, and a distributed bandwidth of the DRU is less than the first PPDU bandwidth, where a transmit power of the first PPDU on each of N subcarriers is less than or equal to a second threshold, the N subcarriers are located in a frequency range of a center frequency of the distributed bandwidth of the DRU, and N is a positive integer. The first PPDU bandwidth is, for example, a bandwidth of the first PPDU.

In this embodiment of this application, the distributed bandwidth of the DRU may use a guard tone solution corresponding to a PPDU bandwidth, which can meet a requirement on a quantity of guard tones corresponding to the PPDU bandwidth, and ensure that a uniform tone plan can be used for the distributed bandwidth of the DRU and the PPDU bandwidth regardless of a value of the distributed bandwidth of the DRU. In addition, in this embodiment of this application, a function of a direct current subcarrier on the distributed bandwidth of the DRU is further approximately implemented by using the N subcarriers, to resolve a problem that the distributed bandwidth of the DRU lacks a direct current subcarrier after the guard tone solution is changed.

With reference to the fifth aspect or the sixth aspect, in an optional implementation, a quantity of guard tones corresponding to the distributed bandwidth of the DRU is equal to the quantity of guard tones corresponding to the first PPDU bandwidth. For example, if the DRU is located at a high frequency edge of the frequency domain resource corresponding to the first PPDU bandwidth, a quantity of guard tones corresponding to the distributed bandwidth of the DRU at the high frequency edge may be equal to a quantity of guard tones corresponding to a high frequency edge of the first PPDU bandwidth; or, if the DRU is located at a low frequency edge of the frequency domain resource corresponding to the first PPDU bandwidth, a quantity of guard tones corresponding to the distributed bandwidth of the DRU at the low frequency edge may be equal to a quantity of guard tones corresponding to a low frequency edge of the first PPDU bandwidth.

With reference to the fifth aspect or the sixth aspect, in an optional implementation, the frequency range includes only the center frequency, N=1, and the N subcarriers are subcarriers corresponding to the center frequency of the distributed bandwidth of the DRU; or, the frequency range includes the center frequency and another frequency other than the center frequency, N>1, and the N subcarriers include subcarriers corresponding to the center frequency of the distributed bandwidth of the DRU. For example, if N is 1, the subcarrier may be a subcarrier corresponding to the center frequency of the distributed bandwidth of the DRU. In this way, the distributed bandwidth of the DRU can be similar to having a direct current subcarrier, and it is unnecessary to use too many subcarriers as direct current subcarriers, but more subcarriers can be saved for data transmission.

With reference to the fifth aspect or the sixth aspect, in an optional implementation, the N subcarriers are a part or all of null subcarriers included in a frequency domain resource corresponding to the distributed bandwidth of the DRU. The distributed bandwidth of the DRU has corresponding null subcarriers. In this embodiment of this application, the null subcarriers may be used as the N subcarriers, so that the N subcarriers are enabled to not only implement functions of the null subcarriers, but also be similar to implementing a function of the direct current subcarrier. In this case, no other subcarrier needs to be additionally set as a direct current subcarrier for the distributed bandwidth of the DRU, and more subcarriers can be saved for data transmission.

With reference to the fifth aspect or the sixth aspect, in an optional implementation, the transmit power of the first PPDU on each of the N subcarriers is equal to the second threshold, and the second threshold is 0. In this manner, the N subcarriers are enabled to approximately implement the function of the direct current subcarrier.

With reference to the fifth aspect or the sixth aspect, in an optional implementation, transmit powers of the first PPDU on K subcarriers are less than or equal to a third threshold, the K subcarriers include a guard tone corresponding to the distributed bandwidth of the DRU, and K is a positive integer. If the distributed bandwidth of the DRU is less than the first PPDU bandwidth, the distributed bandwidth of the DRU also has a frequency edge. In this case, in this embodiment of this application, a function of a guard tone may be similarly implemented at the frequency edge of the distributed bandwidth of the DRU, to reduce out-of-band leakage. For example, if the DRU is located at the high frequency edge of the frequency domain resource corresponding to the first PPDU bandwidth, the K subcarriers may be located at a low frequency edge of the distributed bandwidth of the DRU (in this case, a quantity of guard tones corresponding to the low frequency edge of the distributed bandwidth of the DRU is the same as the quantity of guard tones corresponding to the high frequency edge of the first PPDU bandwidth); or, if the DRU is located at the low frequency edge of the frequency domain resource corresponding to the first PPDU bandwidth, the K subcarriers may be located at a high frequency edge of the distributed bandwidth of the DRU (in this case, the quantity of guard tones corresponding to the low frequency edge of the distributed bandwidth of the DRU is the same as the quantity of guard tones corresponding to the low frequency edge of the first PPDU bandwidth); or, if the DRU is located at a non-edge location of the frequency domain resource corresponding to the first PPDU bandwidth, the K subcarriers may be located at the high frequency edge or the low frequency edge of the distributed bandwidth of the DRU.

With reference to the fifth aspect or the sixth aspect, in an optional implementation, the distributed bandwidth of the DRU is 20 MHz; and the first PPDU bandwidth is 40 MHz, 80 MHz, 160 MHz, or 320 MHz.

With reference to the fifth aspect or the sixth aspect, in an optional implementation, K is less than or equal to 5, or K is less than or equal to 6.

With reference to the fifth aspect or the sixth aspect, in an optional implementation, transmit powers of the first PPDU on different subcarriers in the K subcarriers are equal; or, a transmit power of the first PPDU on a second subcarrier in the K subcarriers is inversely proportional to or negatively correlated with a frequency difference between a frequency of the second subcarrier and the center frequency of the distributed bandwidth of the DRU.

With reference to the fifth aspect or the sixth aspect, in an optional implementation, the transmit powers of the first PPDU on the K subcarriers are equal to the third threshold, and the third threshold is 0.

For technical effects brought by a part of optional implementations of the fifth aspect or the sixth aspect, refer to descriptions of the technical effects of corresponding implementations of the first aspect or the second aspect.

According to a seventh aspect, a seventh communication method is provided. The method may be performed by a first apparatus. The first apparatus is, for example, an access point device (for example, an AP) or a chip system, and the chip system can implement a function of the access point device. Alternatively, the first apparatus is, for example, a station device (for example, a STA) or a chip system, and the chip system can implement a function of the station device. The method includes: generating a first PPDU; and sending the first PPDU according to a predefined rule. A frequency domain resource corresponding to a first PPDU bandwidth includes a DRU, the DRU is located at a non-edge location of the frequency domain resource corresponding to the first PPDU bandwidth, and a distributed bandwidth of the DRU is less than the first PPDU bandwidth, where the predefined rule is that when a PPDU bandwidth is greater than a distributed bandwidth of a DRU, the DRU is located at a non-edge location of a frequency domain resource corresponding to the PPDU bandwidth. The first PPDU bandwidth is, for example, a bandwidth of the first PPDU.

According to an eighth aspect, an eighth communication method is provided. The method may be performed by a second apparatus. The second apparatus is, for example, an access point device (for example, an AP) or a chip system, and the chip system can implement a function of the access point device. Alternatively, the second apparatus is, for example, a station device (for example, a STA) or a chip system, and the chip system can implement a function of the station device. The method includes: receiving a first PPDU according to a predefined rule. A frequency domain resource corresponding to a first PPDU bandwidth includes a DRU, the DRU is located at a non-edge location of the frequency domain resource corresponding to the first PPDU bandwidth, and a distributed bandwidth of the DRU is less than the first PPDU bandwidth, where the predefined rule is that when a PPDU bandwidth is greater than a distributed bandwidth of a DRU, the DRU is located at a non-edge location of a frequency domain resource corresponding to the PPDU bandwidth. The first PPDU bandwidth is, for example, a bandwidth of the first PPDU.

Because the DRU is not located at an edge of the frequency domain resource corresponding to the PPDU bandwidth, a requirement on a quantity of guard tones corresponding to the PPDU bandwidth does not need to be met. Even if the distributed bandwidth of the DRU uses a tone plan corresponding to the PPDU bandwidth when the PPDU bandwidth is equal to the distributed bandwidth of the DRU, a requirement of the PPDU bandwidth on the guard tones is not affected. In this embodiment of this application, a protocol-predefined rule is added, which is equivalent to increasing a limitation on a sending and receiving process, thereby simplifying implementation of a device.

With reference to the seventh aspect or the eighth aspect, in an optional implementation, the distributed bandwidth of the DRU is 20 MHz; and the first PPDU bandwidth is 40 MHz, 80 MHz, 160 MHz, or 320 MHz.

According to a ninth aspect, a communication apparatus is provided. The communication apparatus has a function of implementing behaviors in method embodiments according to any one of the first aspect, the third aspect, the fifth aspect, or the seventh aspect. For beneficial effects, refer to the foregoing descriptions. Details are not described herein again.

The communication apparatus may be the first apparatus according to any one of the first aspect, the third aspect, the fifth aspect, or the seventh aspect. The first apparatus is, for example, an access point device or a station device, or an electronic device (for example, a chip system) configured in the access point device or the station device, or a relatively large device including the access point device or the station device. The first apparatus includes a corresponding means (means) or module for performing the foregoing methods. For example, the communication apparatus includes: a processing unit (or referred to as a processing module sometimes) and a transceiver unit (or referred to as a transceiver module sometimes).

For example, the processing unit is configured to generate a first PPDU; and the transceiver unit is configured to send the first PPDU. A frequency domain resource corresponding to a first PPDU bandwidth includes a frequency domain resource corresponding to a reference bandwidth, the frequency domain resource corresponding to the reference bandwidth is located at an edge of the frequency domain resource corresponding to the first PPDU bandwidth, and the reference bandwidth is less than the first PPDU bandwidth, where a transmit power of the first PPDU on each of M subcarriers is less than or equal to a first threshold, the M subcarriers belong to guard tones corresponding to the first PPDU bandwidth and do not belong to guard tones corresponding to the reference bandwidth, and M is a positive integer. The first PPDU bandwidth is, for example, a bandwidth of the first PPDU.

For another example, the processing unit is configured to generate a first PPDU; and the transceiver unit is configured to send the first PPDU. A frequency domain resource corresponding to a first PPDU bandwidth includes a DRU, the DRU is located at an edge of the frequency domain resource corresponding to the first PPDU bandwidth, and a distributed bandwidth of the DRU is less than the first PPDU bandwidth, where the distributed bandwidth of the DRU corresponds to Q guard tones, Q is the same as a quantity of guard tones corresponding to the first PPDU bandwidth, and Q is a positive integer. The first PPDU bandwidth is, for example, a bandwidth of the first PPDU.

For another example, the processing unit is configured to generate a first PPDU; and the transceiver unit is configured to send the first PPDU. A frequency domain resource corresponding to a first PPDU bandwidth includes a DRU, and a distributed bandwidth of the DRU is less than the first PPDU bandwidth, where a transmit power of the first PPDU on each of N subcarriers is less than or equal to a second threshold, the N subcarriers are located in a frequency range of a center frequency of the distributed bandwidth of the DRU, and N is a positive integer. The first PPDU bandwidth is, for example, a bandwidth of the first PPDU.

For another example, the processing unit is configured to generate a first PPDU; and the transceiver unit is configured to send the first PPDU according to a predefined rule. A frequency domain resource corresponding to a first PPDU bandwidth includes a DRU, the DRU is located at a non-edge location of the frequency domain resource corresponding to the first PPDU bandwidth, and a distributed bandwidth of the DRU is less than the first PPDU bandwidth, where the predefined rule is that when a PPDU bandwidth is greater than a distributed bandwidth of a DRU, the DRU is located at a non-edge location of a frequency domain resource corresponding to the PPDU bandwidth. The first PPDU bandwidth is, for example, a bandwidth of the first PPDU.

In an optional implementation, the communication apparatus includes a storage unit. The processing unit can be coupled to the storage unit, and execute a program or instructions in the storage unit, to enable the communication apparatus to perform a function of the first apparatus.

In an optional implementation, the communication apparatus includes: a processor, which is coupled to a memory, and configured to execute instructions in the memory, to implement the method performed by the first apparatus according to any one of the first aspect, the third aspect, the fifth aspect, or the seventh aspect. Optionally, the communication apparatus further includes other components, for example, an antenna, an input/output module, and an interface. Such components may be hardware, software, or a combination of software and hardware.

According to a tenth aspect, a communication apparatus is provided. The communication apparatus has a function of implementing behaviors in method embodiments according to any one of the second aspect, the fourth aspect, the sixth aspect, or the eighth aspect. For beneficial effects, refer to the foregoing descriptions. Details are not described herein again.

The communication apparatus may be the second apparatus according to any one of the second aspect, the fourth aspect, the sixth aspect, or the eighth aspect. The second apparatus is, for example, an access point device or a station device, or an electronic device (for example, a chip system) configured in the access point device or the station device, or a relatively large device including the access point device or the station device. The second apparatus includes a corresponding means (means) or module for performing the foregoing methods. For example, the communication apparatus includes: a processing unit (or referred to as a processing module sometimes) and a transceiver unit (or referred to as a transceiver module sometimes).

For example, the transceiver unit is configured to receive a first PPDU. A frequency domain resource corresponding to a first PPDU bandwidth includes a frequency domain resource corresponding to a reference bandwidth, the frequency domain resource corresponding to the reference bandwidth is located at an edge of the frequency domain resource corresponding to the first PPDU bandwidth, and the reference bandwidth is less than the first PPDU bandwidth, where a transmit power of the first PPDU on each of M subcarriers is less than or equal to a first threshold, the M subcarriers belong to guard tones corresponding to the first PPDU bandwidth and do not belong to guard tones corresponding to the reference bandwidth, and M is a positive integer. The first PPDU bandwidth is, for example, a bandwidth of the first PPDU.

For another example, the transceiver unit is configured to receive a first PPDU. A frequency domain resource corresponding to a first PPDU bandwidth includes a DRU, the DRU is located at an edge of the frequency domain resource corresponding to the first PPDU bandwidth, and a distributed bandwidth of the DRU is less than the first PPDU bandwidth, where the distributed bandwidth of the DRU corresponds to Q guard tones, Q is the same as a quantity of guard tones corresponding to the first PPDU bandwidth, and Q is a positive integer. The first PPDU bandwidth is, for example, a bandwidth of the first PPDU.

For another example, the transceiver unit is configured to receive a first PPDU. A frequency domain resource corresponding to a first PPDU bandwidth includes a DRU, and a distributed bandwidth of the DRU is less than the first PPDU bandwidth, where a transmit power of the first PPDU on each of N subcarriers is less than or equal to a second threshold, the N subcarriers are located in a frequency range of a center frequency of the distributed bandwidth of the DRU, and N is a positive integer. The first PPDU bandwidth is, for example, a bandwidth of the first PPDU.

For another example, the transceiver unit is configured to receive a first PPDU according to a predefined rule. A frequency domain resource corresponding to a first PPDU bandwidth includes a DRU, the DRU is located at a non-edge location of the frequency domain resource corresponding to the first PPDU bandwidth, and a distributed bandwidth of the DRU is less than the first PPDU bandwidth, where the predefined rule is that when a PPDU bandwidth is greater than a distributed bandwidth of a DRU, the DRU is located at a non-edge location of a frequency domain resource corresponding to the PPDU bandwidth. The first PPDU bandwidth is, for example, a bandwidth of the first PPDU.

In an optional implementation, the communication apparatus includes a storage unit. The processing unit can be coupled to the storage unit, and execute a program or instructions in the storage unit, to enable the communication apparatus to perform a function of the second apparatus.

In an optional implementation, the communication apparatus includes: a processor, which is coupled to a memory, and configured to execute instructions in the memory, to implement the method performed by the second apparatus according to any one of the second aspect, the fourth aspect, the sixth aspect, or the eighth aspect. Optionally, the communication apparatus further includes other components, for example, an antenna, an input/output module, and an interface. Such components may be hardware, software, or a combination of software and hardware.

According to an eleventh aspect, a communication apparatus is provided. The communication apparatus may be a first apparatus. The first apparatus is, for example, an access point device or a station device, or is a chip or a chip system used in an access point device or a station device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the first apparatus according to any one of the first aspect, the third aspect, the fifth aspect, or the seventh aspect.

According to a twelfth aspect, a communication apparatus is provided. The communication apparatus may be a second apparatus. The second apparatus is, for example, an access point device or a station device, or is a chip or a chip system used in an access point device or a station device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the second apparatus according to any one of the second aspect, the fourth aspect, the sixth aspect, or the eighth aspect.

According to a thirteenth aspect, a communication system is provided. The system may include a first apparatus and a second apparatus. The first apparatus may perform the method performed by the first apparatus according to any one of the first aspect, the third aspect, the fifth aspect, or the seventh aspect, and the second apparatus may perform the method performed by the second apparatus according to any one of the second aspect, the fourth aspect, the sixth aspect, or the eighth aspect. Optionally, the first apparatus may be implemented by using the communication apparatus according to the ninth aspect or the eleventh aspect, and the second apparatus may be implemented by using the communication apparatus according to the tenth aspect or the twelfth aspect.

According to a fourteenth aspect, a computer-readable storage medium is provided. The computer-readable storage medium is configured to store a computer program. When the computer program runs on a computer, the computer is caused to perform the method according to any one of the first aspect and the eighth aspect.

According to a fifteenth aspect, a computer program product is provided. The computer program product includes a computer program. When the computer program runs on a computer, the computer is caused to perform the method according to any one of the first aspect and the eighth aspect.

According to a sixteenth aspect, a chip system is provided, including a processor and an interface. The processor is configured to invoke instructions from the interface and run the instructions, and when the processor executes the instructions, the method according to any one of the first aspect to the eighth aspect is implemented.

### BRIEF DESCRIPTION OF DRAWINGS

FIG. 1 is a diagram of a tone plan corresponding to a bandwidth of 20 MHz;
FIG. 2 is a diagram of a tone plan corresponding to a bandwidth of 40 MHz;
FIG. 3 is a diagram of a tone plan corresponding to a bandwidth of 80 MHz;
FIG. 4 is a diagram of a punctured PPDU;
FIG. 5 is a diagram of an application scenario according to an embodiment of this application;
FIG. 6 is a flowchart of a first communication method according to an embodiment of this application;
FIG. 7A and FIG. 7B are two diagrams of a guard tone corresponding to a first PPDU bandwidth and a guard tone corresponding to a PPDU bandwidth when the PPDU bandwidth is equal to a reference bandwidth according to an embodiment of this application;
FIG. 8 is a flowchart of a second communication method according to an embodiment of this application;
FIG. 9 is a flowchart of a third communication method according to an embodiment of this application;
FIG. 10 is a diagram of an apparatus according to an embodiment of this application; and
FIG. 11 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, a third parameter and a second parameter may be a same parameter, or may be different parameters. In addition, this name does not indicate different content, application scenarios, priorities, importance, or the like of the two parameters. In addition, step numbers in embodiments described in this application are merely intended to distinguish between different steps, but are not intended to limit a sequence of the steps.

The following describes technical characteristics in embodiments of this application.

Regarding a 6 GHz spectrum, an LPI communication mode has been defined currently. In this communication mode, a transmit power of a device is limited by both a maximum power and a maximum power spectral density. For example, the transmit power of the device cannot exceed a set maximum power, and a power spectral density for transmission by the device also cannot exceed a set maximum power spectral density. As a transmission bandwidth increases, the maximum transmit power of the device increases accordingly. Refer to Table 1, an example of maximum transmit powers corresponding to different bandwidths.

**Table 1**

| Transmission bandwidth | Maximum transmit power of an AP | Maximum transmit power of a STA |
|---|---|---|
| 20 MHz | 18 | 12 |
| 40 MHz | 21 | 15 |
| 80 MHz | 24 | 18 |
| 160 MHz | 27 | 21 |
| 320 MHz | 30 | 24 |

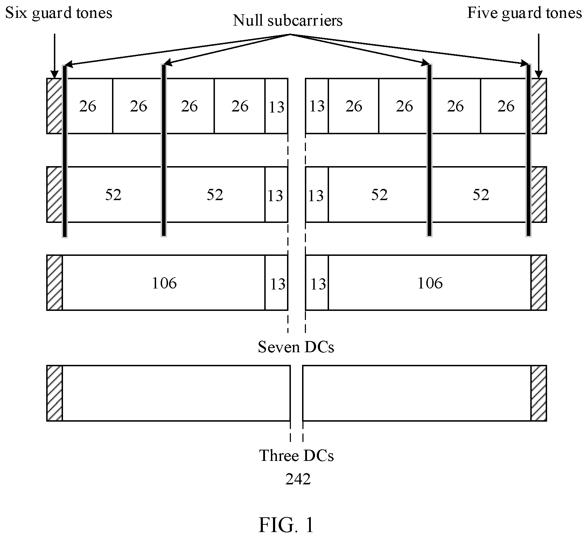

For an rRU, when bandwidths are different, corresponding tone plans may also be different. A tone plan corresponding to a bandwidth is a tone plan defined based on a resource element (resource unit, RU). For example, FIG. 1 is a diagram of a tone plan corresponding to a bandwidth of 20 MHz. When the bandwidth is 20 MHz, the entire bandwidth may include one 242-tone RU, or may include a combination of various RUs such as a 26-tone RU, a 52-tone RU, or a 106-tone RU. In the tone plan, in addition to an RU used for data transmission, some guard tones, null subcarriers (null subcarriers), direct current (direct current, DC) subcarriers, and the like are further included. For this, refer to FIG. 1. For example, in the tone plan corresponding to the bandwidth of 20 MHz, six guard tones and five guard tones are respectively included at two side edges of the bandwidth of 20 MHz, to reduce out-of-band leakage and reduce interference to an adjacent channel. For another example, in the tone plan corresponding to the bandwidth of 20 MHz, three or seven DC components, also referred to as DC subcarriers, are included in the middle of the bandwidth of 20 MHz, and are used to simplify implementation of direct down conversion receivers (direct down conversion receivers).

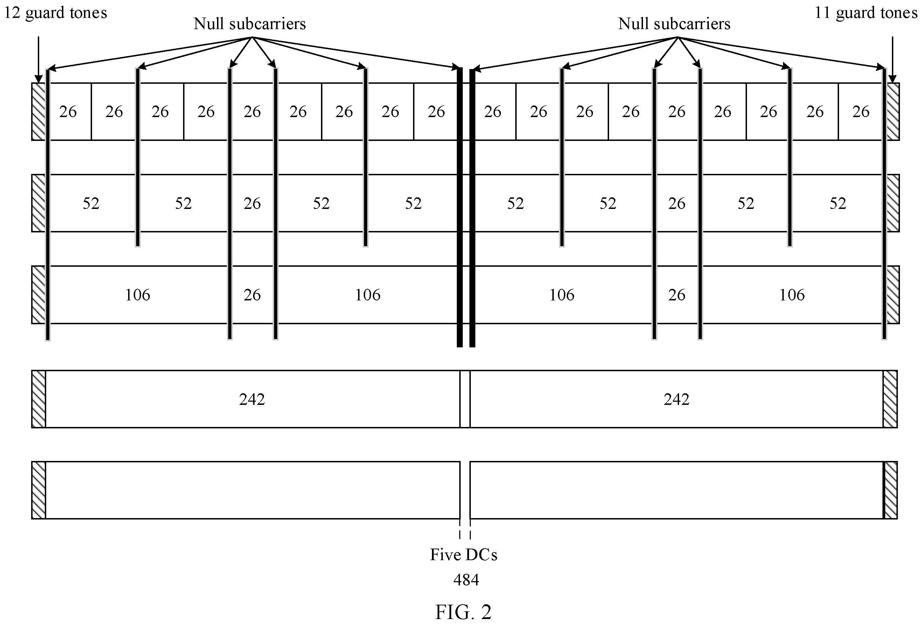

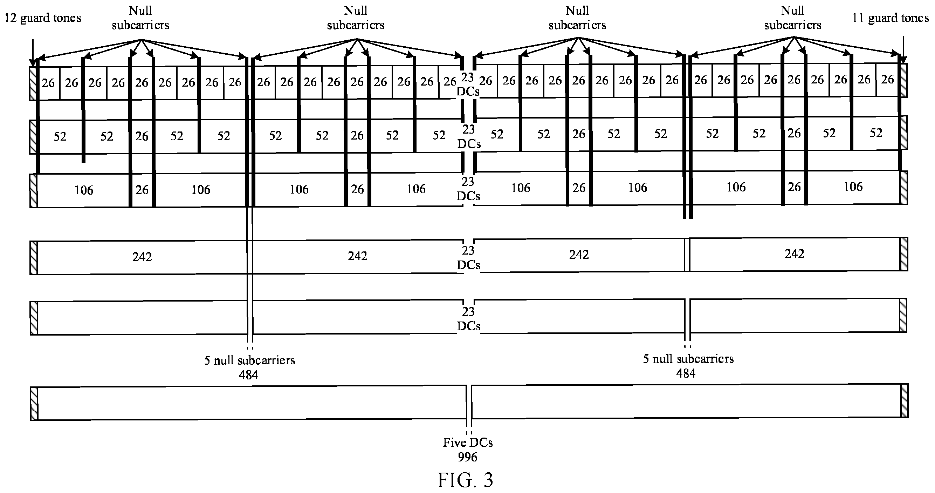

Refer to FIG. 2 and FIG. 3. FIG. 2 is a diagram of a tone plan corresponding to a bandwidth of 40 MHz, and FIG. 3 is a diagram of a tone plan corresponding to a bandwidth of 80 MHz. When the bandwidth is 40 MHz, the entire bandwidth is approximately equivalent to a duplication of the tone plan of the bandwidth of 20 MHz. For example, the bandwidth of 40 MHz may include one 484-tone RU, or may include a combination of various RUs such as a 26-tone RU, a 52-tone RU, a 106-tone RU, or a 242-tone RU. Refer to FIG. 2. After the bandwidth is increased, more guard tones need to be reserved at an edge of the bandwidth. For example, when the bandwidth is 40 MHz, 12 and 11 guard tones are respectively included at two side edges of the bandwidth of 40 MHz, to simplify implementation of a filter at a transmit end.

When the bandwidth is 80 MHz, the entire bandwidth may include four RUs in a unit of 242-tone RU. For example, the entire bandwidth may include one 996-tone RU, or may include a combination of various RUs such as a 26-tone RU, 52-tone RU, 106-tone RU, a 242-tone RU, or a 484-tone RU. Refer to FIG. 3. A quantity and a distribution manner of guard tones corresponding to the bandwidth of 80 MHz are the same as those of the bandwidth of 40 MHz.

When the bandwidth is 160 MHz, the entire bandwidth may be considered as a duplication of two tone plans of 80 MHz. For example, the entire bandwidth may include one 2×996-tone RU, or may include a combination of various RUs such as a 26-tone RU, 52-tone RU, 106-tone RU, 242-tone RU, a 484-tone RU, or a 996-tone RU. In addition, when the bandwidth is 320 MHz, the entire bandwidth may be considered as a duplication of four tone plans of 80 MHz, and the like. These tone plans are not illustrated in a diagram.

In the foregoing various tone plans shown in FIG. 1 to FIG. 3, a 242-tone RU is used as a unit. A left side in the figure may be considered as a lowest frequency, and a right side in the figure may be considered as a highest frequency. For example, in any one of FIG. 1 to FIG. 3, the 242-tone RUs may be numbered from left to right. For example, the numbers are respectively 1, 2, ..., 16, or 0, 1, ..., 15.

RUs corresponding to the tone plans described above are contiguous (that is, the RUs include contiguous subcarriers), and such RUs may also be referred to as rRUs. If a bandwidth of an rRU is relatively small, because of a strict limitation on the frequency spectral density, a transmit power is greatly limited in such an LPI communication scenario.

To increase the transmit power of the device, a design of a DRU is further proposed currently. To be specific, contiguous subcarriers included in an rRU are distributed to an entire transmission bandwidth, to increase the transmit power of the device. For example, for a 26-tone RU, in a case of a bandwidth of 40 MHz, 26 subcarriers included in the 26-tone RU may be distributed to 26 bandwidths of 1 MHz. In this way, a total transmit power of a transmit end may be 26 times of -1 dBm. Compared with a transmit power corresponding to the rRU, a power corresponding to the DRU may be increased by 13 times.

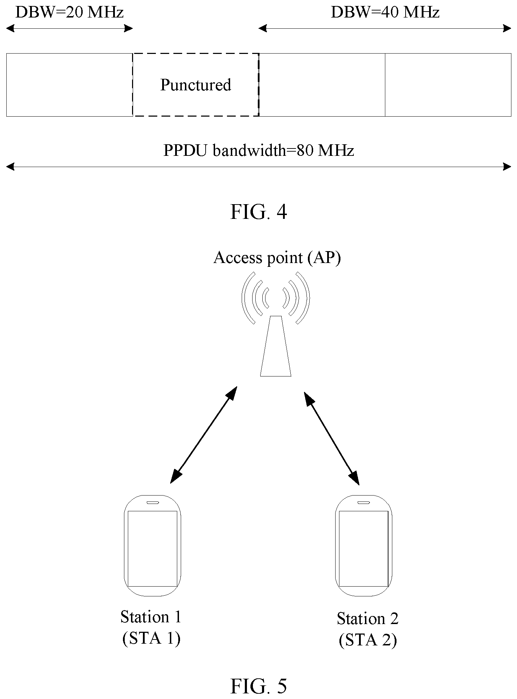

Generally, in a solution of a DRU distribution design, it is expected that a DRU is distributed on a larger bandwidth as much as possible, to increase the transmit power more. However, the DRU is not always distributed across the entire transmission bandwidth. For example, if a PPDU has puncturing, that is, no data is transmitted on a part of sub-channels corresponding to a PPDU bandwidth, subcarriers of the DRU cannot be distributed on the PPDU bandwidth, but can be distributed only on two sides of the puncturing. In this case, a distributed bandwidth of the DRU is less than the PPDU bandwidth. Refer to FIG. 4, an example of a punctured PPDU. For example, the bandwidth of the PPDU is 80 MHz. As shown in FIG. 4, if a bandwidth of 20 MHz included in the PPDU bandwidth is punctured, no data can be transmitted within the 20 MHz. In this case, the DRU cannot be distributed on a bandwidth of 80 MHz, but can be distributed only on a distributed bandwidth of 20 MHz and a distributed bandwidth of 40 MHz separately. For example, one distributed bandwidth is 20 MHz, and the other distributed bandwidth is 40 MHz, as shown by two DBWs in FIG. 4 respectively. For another example, there are some devices (for example, an IoT device or an internet of things device) that support only a bandwidth of 20 MHz. Such devices can be distributed only in a distributed bandwidth of 20 MHz, and the PPDU bandwidth may be greater than 20 MHz, that is, the PPDU bandwidth is greater than the distributed bandwidth of the DRU. For another example, if some devices do not support the DRU, but some other devices support the DRU, these devices may perform hybrid transmission on a relatively large PPDU bandwidth, and the PPDU bandwidth may be greater than the distributed bandwidth of the DRU.

It can be learned from the foregoing description that, for the rRU, when bandwidths are different, corresponding tone plans may also be different, and correspondingly, this is similar for the DRU. Therefore, when the distributed bandwidth of the DRU is less than the PPDU bandwidth, a tone plan corresponding to the distributed bandwidth of the DRU may also be different from a tone plan corresponding to the PPDU bandwidth. If the DRU is located at an edge of a frequency domain resource corresponding to the PPDU bandwidth, because of different tone plans, a guard tone corresponding to the distributed bandwidth of the DRU may not meet a requirement of the tone plan corresponding to the PPDU bandwidth.

In view of this, in embodiments of this application, M subcarriers belong to guard tones corresponding to a first PPDU bandwidth but do not belong to guard tones corresponding to a reference bandwidth, and transmit powers of the first PPDU on the M subcarriers are less than or equal to a first threshold. For example, it is understood as that, although for the reference bandwidth, the M subcarriers do not belong to the guard tones corresponding to the reference bandwidth, the transmit powers of the first PPDU on the M subcarriers are relatively small, that is, the M subcarriers may be similar to implementing functions of guard tones. Therefore, the guard tones corresponding to the reference bandwidth are enabled to meet a requirement of a tone plan corresponding to the first PPDU bandwidth. The reference bandwidth is, for example, equal to a distributed bandwidth of a DRU, which is equivalent to that a guard tone corresponding to the distributed bandwidth of the DRU can meet the requirement of the tone plan corresponding to the first PPDU bandwidth.

Embodiments of this application are applicable to a local area network (local area network, LAN), and in particular, to a wireless local area network (wireless local area network, WLAN), for example, a WLAN that uses any one of institute of electrical and electronics engineers (institute of electrical and electronics engineers, IEEE) 802.11 series protocols. The WLAN may include one or more basic service sets (basic service sets, BSSs). Network nodes in the basic service set include an access point (access point, AP) and a station (station, STA). Embodiments of this application may be further applied to a wireless local area network system that supports 802.11 series protocols such as the IEEE 802.11ax next generation wireless fidelity (wireless fidelity, Wi-Fi) protocol, for example, 802.11be, Wi-Fi 7, or extremely high throughput (extremely high throughput, EHT), and 802.11be next generation, Wi-Fi 8, ultra high reliability (ultra high reliability, UHR, 802.11bn), and Wi-Fi AI, and may be further applied to an ultra-wideband (ultra-wideband, UWB)-based wireless personal area network system and a sensing (sensing) system.

Embodiments of this application are also applicable to a wireless local area network like an internet of things (internet of things, IoT) network or a vehicle to X (vehicle to X, V2X) network. Certainly, embodiments of this application may be further applicable to another possible communication system, for example, a long term evolution (long term evolution, LTE) communication system, an LTE frequency division duplex (frequency division duplex, FDD) communication system, an LTE time division duplex (time division duplex, TDD) communication system, a universal mobile telecommunication system (universal mobile telecommunication system, UMTS), a worldwide interoperability for microwave access (worldwide interoperability for microwave access, WiMAX) communication system, a fifth generation (5th generation, 5G) communication system, or a future evolved communication system (for example, a sixth generation (6th generation, 6G) communication system).

The following uses an example in which embodiments of this application are applicable to the WLAN. FIG. 5 is a diagram of a network architecture of a WLAN to which an embodiment of this application is applicable. In FIG. 5, for example, the WLAN includes one AP and two STAs, and the STAs are mobile phones. A STA associated with the AP can receive a frame (for example, a trigger frame) sent by the AP, and can also send a frame (for example, uplink data) to the AP. This embodiment of this application may be applicable to communication between an AP and a STA, or may be applicable to communication between APs. For example, the APs may communicate with each other by using a distributed system (distributed system, DS). Alternatively, this embodiment of this application may be applicable to communication between STAs. For example, the STAs directly communicate with each other without using an AP. In this embodiment of this application, there may be one or more APs performing communication, and there may be one or more STAs performing communication.

The AP may be an access point for a terminal device to join a wired (or wireless) network. The AP is equivalent to a bridge that connects the wired network and the wireless network, and a main function is to connect various wireless network clients together and then connect the wireless network to the Ethernet. For example, the AP may be a terminal device (for example, a mobile phone) or a network device (for example, a router) having a mobile hotspot (Wi-Fi) chip. In this embodiment of this application, the AP may be a device that supports the 802.11be standard, or may be a device that supports a plurality of WLAN standards of the 802.11 series, such as 802.11ax, 802.11ay, 802.11ac, 802.11n, 802.11g, 802.11b, 802.11a or 802.11be, 802.11bn, and future 802.11 series.

The STA may be a wireless communication chip, a wireless sensor, a wireless communication terminal, or the like, and may also be referred to as a user. For example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, a computer that supports a Wi-Fi communication function, or the like. Optionally, the STA may support the 802.11be standard, or may support the plurality of WLAN standards of the 802.11 series, such as 802.11ax, 802.11ay, 802.11ac, 802.11n, 802.11g, 802.11b, 802.11a, or 802.11be, 802.11bn, and the future 802.11 series.

Quantities of APs and STAs shown in FIG. 5 are merely examples, and may be smaller or larger.

To better describe embodiments of this application, the following describes, with reference to the accompanying drawings, the method provided in embodiments of this application. In method flowcharts corresponding to embodiments of this application, all steps indicated by dashed lines are optional steps. The method provided in embodiments of this application may be applied to the network architecture shown in FIG. 5. For example, a first apparatus in embodiments of this application may be the STA 1, the STA 2, or the AP in FIG. 5, and a second apparatus in embodiments of this application may be another device different from the first apparatus in FIG. 5, or a device (for example, another AP) that is not shown in FIG. 5.

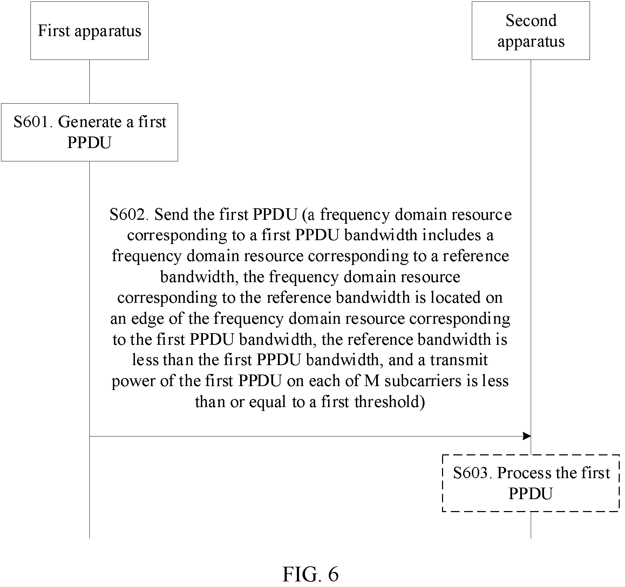

An embodiment of this application provides a first communication method. FIG. 6 is a flowchart of the method.

S601. A first apparatus generates a first PPDU. The first PPDU includes, for example, data, and may further include information such as a preamble (preamble). This is not limited.

S602. The first apparatus sends the first PPDU. Correspondingly, a second apparatus receives the first PPDU. A frequency domain resource corresponding to first PPDU bandwidth includes a frequency domain resource corresponding to a reference bandwidth, the frequency domain resource corresponding to the reference bandwidth is located at an edge of the frequency domain resource corresponding to the first PPDU bandwidth, the reference bandwidth is less than the first PPDU bandwidth, and a transmit power of the first PPDU on each of M subcarriers is less than or equal to a first threshold. Descriptions are as follows.

In embodiments of this application, the first PPDU bandwidth is, for example, a bandwidth of the first PPDU. It may be understood that a PPDU bandwidth is a bandwidth of a PPDU (the bandwidth of the PPDU). In this embodiment of this application, the two concepts "PPDU bandwidth" and "the bandwidth of the PPDU" may be replaced with each other. The PPDU bandwidth indicates a channel bandwidth occupied by one PPDU. For example, the first PPDU bandwidth may indicate a channel bandwidth occupied by the first PPDU. For example, a universal signaling (universal signaling, U-SIG) field included in a PPDU may include a bandwidth (bandwidth) field, and the bandwidth field occupies, for example, 3 bits, and is used to indicate a bandwidth of the PPDU. For example, if a value of the 3 bits is "0", it indicates that the bandwidth of the PPDU is 20 MHz; if a value of the 3 bits is "1", it indicates that the bandwidth of the PPDU is 40 MHz; if a value of the 3 bits is "2", it indicates that the bandwidth of the PPDU is 80 MHz; if a value of the 3 bits is "3", it indicates that the bandwidth of the PPDU is 160 MHz; if a value of the 3 bits is "4", it indicates that the bandwidth of the PPDU is 320 MHz-1; if a value of the 3 bits is "5", it indicates that the bandwidth of the PPDU is 320 MHz-2; and if a value of the 3 bits is "6" and "7", it indicates two reserved states. 320 MHz-1 and 320 MHz-2 represent two different types of 320 MHz.

There may be a UHR multi user (multi user, MU) PPDU or a UHR trigger based (trigger based, TB) PPDU in UHR PPDUs. Bandwidths of the UHR MU PPDU and the UHR TB PPDU each may be indicated in a U-SIG field of a corresponding PPDU. The bandwidth of the UHR MU PPDU is determined by a transmit end of the UHR MU PPDU, and the bandwidth of the UHR TB PPDU is indicated by a trigger frame that is received by a transmit end of the UHR TB PPDU before the UHR TB PPDU is sent.

For the UHR TB PPDU, the transmit end of the UHR TB PPDU may send data on one RU or a multiple resource unit (multiple resource unit, MRU). However, a preamble (preamble) of the UHR TB PPDU is sent only on a 20 MHz sub-channel on which the RU or the MRU is located. Therefore, for the transmit end of the UHR TB PPDU, an energy portion of the UHR TB PPDU sent by the transmit end may occupy only a part of a bandwidth of the UHR TB PPDU, and does not occupy the entire bandwidth of the UHR TB PPDU.

For example, an AP may send a trigger frame to trigger a STA to send an 80 MHz PPDU on a 242-tone rRU. The PPDU is, for example, the foregoing UHR TB PPDU. If the trigger frame indicates that a PPDU bandwidth is 80 MHz, the PPDU bandwidth is 80 MHz. However, the STA sends the PPDU only on a scheduled 242-tone rRU, and sends a preamble on a 20 MHz sub-channel corresponding to the rRU. That is, although the STA does not send the PPDU on the entire bandwidth of the PPDU, the PPDU bandwidth is still 80 MHz instead of 20 MHz.

For another example, in this embodiment of this application, the first apparatus is a STA, and the second apparatus is an AP. The AP sends a trigger frame to trigger the STA to send a PPDU on a 26-tone DRU having a distributed bandwidth of 20 MHz. The STA sends a first PPDU only on an allocated 26-tone DRU, and sends, on 20 MHz corresponding to the distributed bandwidth, a preamble corresponding to the first PPDU. However, from a perspective of the AP, a first PPDU bandwidth is still 80 MHz. Therefore, when sending the first PPDU, the STA still needs to meet a spectrum template of 80 MHz (for example, the spectrum template is a tone plan corresponding to a bandwidth of 80 MHz).

FIG. 4 is used as an example. For example, the PPDU bandwidth in FIG. 4 is the first PPDU bandwidth, that is, the first PPDU bandwidth is 80 MHz. For example, if a 26-tone DRU (a distributed bandwidth of the DRU is, for example, DBW=20 MHz on the left side of FIG. 4) is allocated to the first apparatus, the first apparatus sends the first PPDU on the 26-tone DRU. However, the first PPDU bandwidth is still 80 MHz instead of 20 MHz.

Correspondingly, a frequency domain resource corresponding to a PPDU bandwidth is a frequency domain resource covered by a bandwidth of a PPDU. For example, a frequency domain resource corresponding to the first PPDU bandwidth is a frequency domain resource covered by a bandwidth of the first PPDU. FIG. 4 is still used as an example. If the PPDU bandwidth in FIG. 4 is 80 MHz, a frequency domain resource corresponding to the PPDU bandwidth is a frequency domain resource covered by the 80 MHz. It may be understood that even if a case such as puncturing exists in the 80 MHz, because the PPDU bandwidth is 80 MHz, the frequency domain resource corresponding to the PPDU bandwidth is still the frequency domain resource covered by the 80 MHz.

For example, the frequency domain resource corresponding to the first PPDU bandwidth is referred to as a first frequency domain resource. The first frequency domain resource may include the frequency domain resource corresponding to the reference bandwidth, and the reference bandwidth is less than the first PPDU bandwidth. Optionally, that the reference bandwidth is the distributed bandwidth of the DRU may be understood as that the first frequency domain resource includes the DRU. For example, the reference bandwidth is 20 MHz, and the first PPDU bandwidth is, for example, a bandwidth of 40 MHz, 80 MHz, 160 MHz, 320 MHz, or a bandwidth greater than 320 MHz. This is not limited.

The frequency domain resource corresponding to the reference bandwidth is, for example, referred to as a second frequency domain resource, and the second frequency domain resource may be located at an edge of the first frequency domain resource. If the reference bandwidth is the distributed bandwidth of the DRU, the second frequency resource may be a frequency domain resource corresponding to the distributed bandwidth of the DRU. For example, it is understood that the frequency domain resource corresponding to the reference bandwidth includes the DRU. There may be one or more DRUs. Optionally, a highest frequency in the first frequency domain resource may be the same as a highest frequency in the second frequency domain resource, or it is understood that the second frequency domain resource is located at a high frequency edge of the first frequency domain resource; or, a lowest frequency in the first frequency domain resource may be the same as a lowest frequency in the second frequency domain resource, or it is understood that the second frequency domain resource is located at a low frequency edge of the first frequency domain resource. FIG. 4 is used as an example. The PPDU bandwidth in FIG. 4 is, for example, the first PPDU bandwidth. The second frequency domain resource in FIG. 4 is, for example, located at a left edge or a right edge of the first frequency domain resource. The left edge is a low frequency edge, and the right edge is a high frequency edge.

For example, in this embodiment of this application, a quantity and distribution of guard tones corresponding to the reference bandwidth are the same as a quantity and distribution of guard tones corresponding to the PPDU bandwidth when the PPDU bandwidth is equal to the reference bandwidth. This may be understood as that if the reference bandwidth is equal to a bandwidth of a PPDU (the bandwidth of the PPDU is referred to as a PPDU bandwidth for short), the quantity and distribution of guard tones corresponding to the reference bandwidth are the same as a quantity and distribution of guard tones corresponding to the PPDU bandwidth. For example, the reference bandwidth is the distributed bandwidth of the DRU. A quantity and distribution of guard tones corresponding to the distributed bandwidth of the DRU may be the same as a quantity and distribution of guard tones corresponding to the PPDU bandwidth when the PPDU bandwidth is equal to the distributed bandwidth. For example, if the reference bandwidth is 20 MHz, the quantity and distribution of guard tones corresponding to the reference bandwidth are the same as a quantity and distribution of guard tones corresponding to the 20 MHz when the PPDU bandwidth is 20 MHz. Optionally, a tone plan corresponding to the reference bandwidth may be the same as a tone plan corresponding to the PPDU bandwidth when the PPDU bandwidth is equal to the reference bandwidth; or, the tone plan corresponding to the reference bandwidth may be different from the tone plan corresponding to the PPDU bandwidth when the PPDU bandwidth is equal to the reference bandwidth, but the quantity and distribution of guard tones corresponding to the reference bandwidth may be the same as the quantity and distribution of guard tones corresponding to the PPDU bandwidth when the PPDU bandwidth is equal to the reference bandwidth. For example, the reference bandwidth is the distributed bandwidth of the DRU. A tone plan corresponding to the distributed bandwidth of the DRU may be the same as a tone plan corresponding to the PPDU bandwidth when the PPDU bandwidth is equal to the distributed bandwidth; or, the tone plan corresponding to the distributed bandwidth of the DRU may be different from the tone plan corresponding to the PPDU bandwidth when the PPDU bandwidth is equal to the distributed bandwidth, but the quantity and distribution of the guard tones corresponding to the distributed bandwidth may be the same as the quantity and distribution of the guard tones corresponding to the PPDU bandwidth when the PPDU bandwidth is equal to the distributed bandwidth. That the tone plan corresponding to the reference bandwidth is the same as the tone plan corresponding to the PPDU bandwidth when the PPDU bandwidth is equal to the reference bandwidth may be understood as that the reference bandwidth is equal to a bandwidth of a PPDU (the bandwidth of the PPDU is referred to as a PPDU bandwidth for short), and the tone plan corresponding to the reference bandwidth is the same as a tone plan corresponding to the PPDU bandwidth. Similarly, that the tone plan corresponding to the reference bandwidth is different from the tone plan corresponding to the PPDU bandwidth when the PPDU bandwidth is equal to the reference bandwidth may be understood as that the reference bandwidth is equal to a bandwidth of a PPDU (the bandwidth of the PPDU is referred to as a PPDU bandwidth for short), and the tone plan corresponding to the reference bandwidth is different from a tone plan corresponding to the PPDU bandwidth.

For example, the reference bandwidth is 20 MHz. It can be learned from FIG. 1 that for a bandwidth of 20 MHz, two edges (for example, the left edge and the right edge shown in FIG. 1) include six guard tones and five guard tones respectively. In this case, in this embodiment of this application, two edges of the reference bandwidth may also correspond to six guard tones and five guard tones respectively.

If the first PPDU bandwidth is greater than the reference bandwidth, a quantity and distribution of guard tones corresponding to the first PPDU bandwidth may be different from the quantity and distribution of the guard tones corresponding to the PPDU bandwidth when the PPDU bandwidth is equal to the reference bandwidth. In other words, if the first PPDU bandwidth is greater than the reference bandwidth, the quantity and distribution of the guard tones corresponding to the first PPDU bandwidth may be different from the quantity and distribution of the guard tones corresponding to the reference bandwidth. The "PPDU bandwidth" herein refers to a bandwidth of a PPDU, and the bandwidth is equal to the reference bandwidth. The "PPDU bandwidth" and the "first PPDU bandwidth" herein are different concepts. For example, the guard tones corresponding to the first PPDU bandwidth may be guard tones included in a tone plan corresponding to the first PPDU bandwidth.

In addition to the guard tones corresponding to the first PPDU bandwidth, guard tone corresponding to the first PPDU may further exist. Optionally, the guard tones corresponding to the first PPDU bandwidth and the guard tones corresponding to the first PPDU may be different concepts. For example, the guard tones corresponding to the first PPDU may be guard tones corresponding to the distributed bandwidth of the DRU at an edge of the frequency domain resource corresponding to the first PPDU bandwidth (that is, an edge of the frequency domain resource corresponding to the first PPDU bandwidth, at which the DRU is located) when the DRU is located at the edge.

For example, if the first PPDU bandwidth is 40 MHz, and the reference bandwidth is 20 MHz, it can be learned from FIG. 2 that two edges (for example, the left edge and the right edge shown in FIG. 2) of the first PPDU bandwidth correspond to 12 guard tones and 11 guard tones respectively, and it can be learned from FIG. 1 that two edges (for example, the left edge and the right edge shown in FIG. 1) of the reference bandwidth include six guard tones and five guard tones respectively. It can be learned that when the reference bandwidth is less than the first PPDU bandwidth, the quantity and distribution of the guard tones corresponding to the PPDU bandwidth when the PPDU bandwidth is equal to the reference bandwidth may not meet a spectrum template corresponding to the first PPDU bandwidth (for example, the spectrum template corresponding to the first PPDU bandwidth may be the tone plan corresponding to the first PPDU bandwidth).

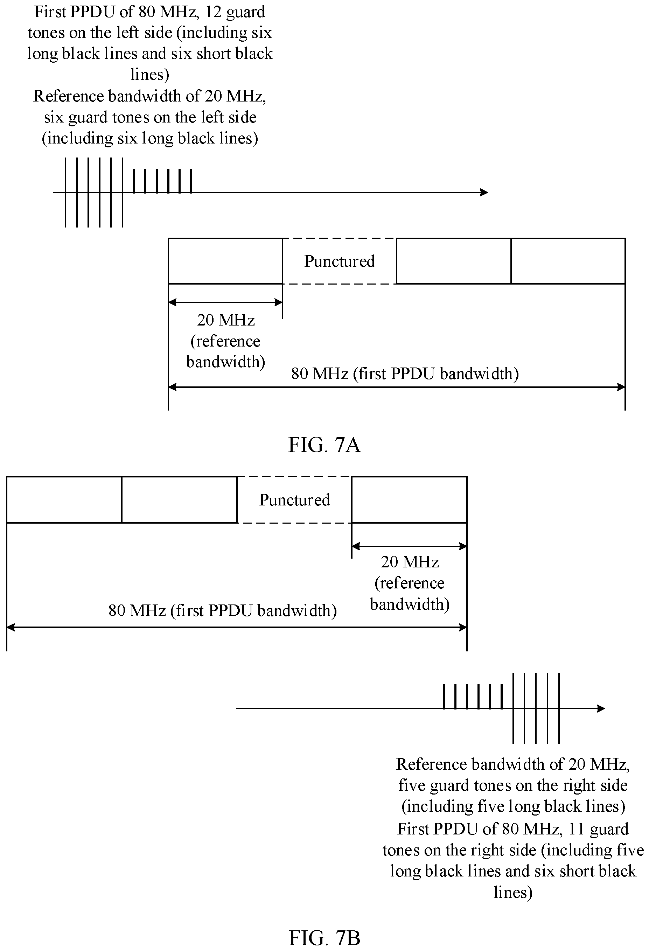

Refer to FIG. 7A. The guard tones corresponding to the first PPDU bandwidth and the guard tones corresponding to the PPDU bandwidth when the PPDU bandwidth is equal to the reference bandwidth are described by using an example in which the first PPDU bandwidth is 80 MHz, the reference bandwidth is 20 MHz, and the reference bandwidth is the distributed bandwidth of the DRU. In FIG. 7A, 20 MHz in the first PPDU bandwidth is punctured, and the DRU is separately distributed in the remaining 20 MHz and 40 MHz. The reference bandwidth in this embodiment of this application is, for example, the same as the distributed bandwidth of 20 MHz of the DRU. In FIG. 7A, the frequency domain resource corresponding to the reference bandwidth is located at an edge (the left edge in FIG. 7A) of the frequency domain resource corresponding to the first PPDU bandwidth. For example, the frequency domain resource of the reference bandwidth is a DRU. A quantity of guard tones corresponding to the left edge of the first PPDU bandwidth is 12, and a quantity of guard tones corresponding to the left edge of the reference bandwidth is 6.

Then, refer to FIG. 7B. The guard tones corresponding to the first PPDU bandwidth and the guard tones corresponding to the PPDU bandwidth when the PPDU bandwidth is equal to the reference bandwidth are described by continuously using the example in which the first PPDU bandwidth is 80 MHz, the reference bandwidth is 20 MHz, and the reference bandwidth is the distributed bandwidth of the DRU. Different from FIG. 7A, the frequency domain resource corresponding to the reference bandwidth is located at the right edge of the frequency domain resource corresponding to the first PPDU bandwidth. For example, the frequency domain resource of the reference bandwidth is a DRU. A quantity of guard tones corresponding to the right edge of the first PPDU bandwidth is 11, and a quantity of guard tones corresponding to the right edge of the reference bandwidth is 5.

In addition, if the reference bandwidth (for example, the distributed bandwidth of the DRU) is equal to the first PPDU bandwidth, the quantity of guard tones corresponding to the reference bandwidth is, for example, X. However, if the reference bandwidth (for example, the distributed bandwidth of the DRU) is less than the first PPDU bandwidth, the quantity of guard tones corresponding to the reference bandwidth is, for example, Y, where Y may be less than X.

FIG. 7A or FIG. 7B is used as an example. The left edge of the first PPDU bandwidth corresponds to 12 guard tones (for example, 12 guard tones on the left in FIG. 7A), and the right edge of the first PPDU bandwidth corresponds to 11 guard tones (for example, 11 guard tones on the right in FIG. 7B). The left edge of the distributed bandwidth of the DRU corresponds to six guard tones (for example, six guard tones shown by long lines on the outer left side in FIG. 7A), and the right edge of the distributed bandwidth of the DRU corresponds to five guard tones (for example, five guard tones shown by long lines on the outer right side in FIG. 7B). It may be understood as that the guard tones corresponding to the PPDU bandwidth when the PPDU bandwidth is equal to the reference bandwidth are less than the guard tones corresponding to the first PPDU bandwidth. The guard tones corresponding to the first PPDU bandwidth may be the guard tones corresponding to the reference bandwidth when the first PPDU bandwidth is equal to the reference bandwidth (for example, the distributed bandwidth of the DRU).

To enable the quantity and distribution of guard tones corresponding to the PPDU bandwidth when the PPDU bandwidth is equal to the reference bandwidth to meet the spectrum template corresponding to the first PPDU bandwidth, in this embodiment of this application, when the first apparatus sends the first PPDU, the transmit power of the first PPDU on each of the M subcarriers may be less than or equal to the first threshold. The M subcarriers may belong to the guard tones corresponding to the first PPDU bandwidth but do not belong to the guard tones corresponding to the PPDU bandwidth when the PPDU bandwidth is equal to the reference bandwidth, and M is a positive integer. For example, if a part of guard tones in the guard tones corresponding to the first PPDU bandwidth do not belong to the guard tones corresponding to the PPDU bandwidth when the PPDU bandwidth is equal to the reference bandwidth, the M subcarriers may include a part or all of these guard tones. Such processing is equivalent to an effect that the quantity of guard tones corresponding to the reference bandwidth is supplemented to be equal to the quantity of guard tones corresponding to the first PPDU bandwidth by using the M subcarriers. For example, if transmit powers on the M subcarriers are 0, it may be considered or understood as that although the reference bandwidth is less than the first PPDU bandwidth, the quantity and distribution of the guard tones corresponding to the reference bandwidth are the same as the quantity and distribution of the guard tones corresponding to the first PPDU bandwidth.

FIG. 7A is used as an example. The 12 guard tones on the left side of FIG. 7A are the guard tones corresponding to the first PPDU bandwidth. In the 12 subcarriers, six subcarriers shown by long lines are the guard tones corresponding to the PPDU bandwidth when the PPDU bandwidth is equal to the reference bandwidth, and six subcarriers shown by short lines are not the guard tones corresponding to the PPDU bandwidth when the PPDU bandwidth is equal to the reference bandwidth. In this case, the M subcarriers may include a part or all of the remaining six subcarriers. Then, FIG. 7B is used as an example. The 11 guard tones on the right side of FIG. 7B are the guard tones corresponding to the first PPDU bandwidth. In the 11 subcarriers, five subcarriers shown by long lines are the guard tones corresponding to the PPDU bandwidth when the PPDU bandwidth is equal to the reference bandwidth, and six subcarriers shown by short lines are not the guard tones corresponding to the PPDU bandwidth when the PPDU bandwidth is equal to the reference bandwidth. In this case, the M subcarriers may include a part or all of the remaining six subcarriers.

Refer to Table 2, an example of the M subcarriers.

**Table 2**

| PPDU bandwidth (index range) | Absolute indexes of 7th to 12th subcarriers in an ascending order of frequencies | Absolute indexes of 6th to 11th subcarriers in a descending order of frequencies |
|---|---|---|
| 40 MHz [-256, 255] | -250, -249, -248, -247, - 246, -245 | 249, 248, 247, 246, 245, 244 |
| 80 MHz [-512, 511) | -506, -505, -504, -503, - 502, -501 | 505, 504, 503, 502, 501, 500 |
| 160 MHz [-1024, 1023] | -1018, -1017, -1016, -1015, -1014, -1013 | 1017, 1016, 1015, 1014, 1013, 1012 |
| 320 MHz [-2048, 2047] | -2042, -2041, -2040, -2039, -2038, -2037 | 2041, 2040, 2039, 2038, 2037, 2036 |

The first column in Table 2 represents indexes of subcarriers corresponding to (or included in) different PPDU bandwidths. For example, a PPDU bandwidth of 40 MHz corresponds to all subcarriers with absolute indexes from -256 to 255. The second column in Table 2 represents a range of subcarriers that may be included in the M subcarriers when the reference bandwidth is located at a low frequency edge (for example, the left edge shown in FIG. 7A or FIG. 7B) of the PPDU bandwidth. For example, when the M subcarriers are located at the low frequency edge of the PPDU bandwidth of 40 MHz, the M subcarriers may include a part or all of subcarriers whose absolute indexes are -250, -249, -248, -247, -246, or -245 respectively. The third column in Table 2 represents a range of subcarriers that may be included in the M subcarriers when the reference bandwidth is located at a high frequency edge (for example, the right edge shown in FIG. 7A or FIG. 7B) of the PPDU bandwidth. For example, when the M subcarriers are located at the high frequency edge of the PPDU bandwidth of 40 MHz, the M subcarriers may include a part or all of subcarriers whose absolute indexes are 249, 248, 247, 246, 245, or 244 respectively.

It may be understood as that to enable the quantity and distribution of the guard tones corresponding to the PPDU bandwidth when the PPDU bandwidth is equal to the reference bandwidth to meet the spectrum template corresponding to the first PPDU bandwidth, the transmit powers of the first PPDU on the M subcarriers are reduced in this embodiment of this application, which is similar to extending the guard tones corresponding to the PPDU bandwidth when the PPDU bandwidth is equal to the reference bandwidth. After extension, for example, it is understood as that the M subcarriers approximately implement functions of the guard tones, so that the quantity and distribution of the guard tones corresponding to the PPDU bandwidth when the PPDU bandwidth is equal to the reference bandwidth meet the spectrum template corresponding to the first PPDU bandwidth as much as possible.

For example, the first threshold is predefined according to a protocol, or is determined by the first apparatus, or is determined by the first apparatus and the second apparatus through negotiation, or is pre-configured in the first apparatus and the second apparatus. Optionally, the first threshold may be greater than or equal to 0.

Optionally, in the M subcarriers, transmit powers of the first PPDU on different subcarriers may be equal. For example, the transmit power of the first PPDU on each of the M subcarriers is equal to the first threshold, and the first threshold is, for example, 0. In this case, the M subcarriers are equivalent to implementing the functions of the guard tones, and out-of-band leakage can be reduced. In this manner, the quantity and distribution of guard tones corresponding to the PPDU bandwidth when the PPDU bandwidth is equal to the reference bandwidth better meet the spectrum template corresponding to the first PPDU bandwidth.

Alternatively, in the M subcarriers, the transmit powers of the first PPDU on different subcarriers may be unequal. For example, an optional manner is that a transmit power of the first PPDU on a first subcarrier in the M subcarriers is inversely proportional to or negatively correlated with a first difference, where the first difference is a frequency difference between a frequency of the first subcarrier and a center frequency of the reference bandwidth. Alternatively, a transmit power of the first PPDU on a subcarrier with a larger frequency difference between a frequency of the subcarrier and the center frequency of the reference bandwidth is smaller. This manner may be understood as that in the M subcarriers, a subcarrier with a larger frequency difference between a frequency of the subcarrier and the center frequency of the reference bandwidth is closer to an outer side of the first PPDU bandwidth, so that transmit powers on these subcarriers are relatively low, and out-of-band leakage can be better reduced.

As described above, in this embodiment of this application, the M subcarriers are enabled to approximately implement the functions of the guard tones. In this case, optionally, the M subcarriers may also be considered as guard tones corresponding to the reference bandwidth. For example, the reference bandwidth is the distributed bandwidth of the DRU. It may be understood as that the distributed bandwidth of the DRU corresponds to Q guard tones, where Q is a positive integer. For example, Q is the same as the quantity of guard tones corresponding to the first PPDU bandwidth. Optionally, if the DRU is located at a high frequency edge of the first PPDU bandwidth, the Q guard tones may be guard tones corresponding to a high frequency edge of the distributed bandwidth of the DRU. In other words, a quantity of guard tones corresponding to the high frequency edge of the distributed bandwidth of the DRU is equal to a quantity of guard tones corresponding to the high frequency edge of the first PPDU bandwidth. Optionally, if the DRU is located at a low frequency edge of the first PPDU bandwidth, the Q guard tones may be guard tones corresponding to a low frequency edge of the distributed bandwidth of the DRU. In other words, a quantity of guard tones corresponding to the low frequency edge of the distributed bandwidth of the DRU is equal to a quantity of guard tones corresponding to the low frequency edge of the first PPDU bandwidth.

FIG. 7A is used as an example. The 12 guard tones at the left edge (for example, a low frequency edge) of the first PPDU bandwidth in FIG. 7A are the guard tones corresponding to the first PPDU bandwidth, and the DRU of 20 MHz in FIG. 7A is located at the left edge of the first PPDU bandwidth. For example, the Q guard tones may be the 12 guard tones corresponding to the left edge of the first PPDU bandwidth. Then, FIG. 7B is used as an example. The 11 guard tones at the right edge (for example, a high frequency edge) of the first PPDU bandwidth in FIG. 7B are the guard tones corresponding to the first PPDU bandwidth, and the DRU of 20 MHz in FIG. 7B is located at the right edge of the first PPDU bandwidth. For example, the Q guard tones may be the 11 guard tones corresponding to the right edge of the first PPDU bandwidth.

Optionally, if the distributed bandwidth of the DRU corresponds to Q guard tones, transmit powers of the first PPDU on the Q guard tones may not be limited, and the Q guard tones may be processed based on existing guard tones. Alternatively, if the distributed bandwidth of the DRU corresponds to Q guard tones, a transmit power of the first PPDU on each of the Q guard tones may be less than or equal to the first threshold, which is also consistent with functions of the guard tones. For a related description of the first threshold, refer to the foregoing descriptions.

Alternatively, although the M subcarriers approximately implement the functions of the guard tones, the M subcarriers may not be considered as the guard tones corresponding to the reference bandwidth. For example, the reference bandwidth is the distributed bandwidth of the DRU. It may be understood as that the distributed bandwidth of the DRU corresponds to (Q-M) guard tones. In this case, the transmit power of the first PPDU on each guard tone in the M subcarriers may be less than or equal to the first threshold, so that the M subcarriers can approximately implement the function of the guard tones.

Optionally, this embodiment of this application may further include S603: The second apparatus processes the first PPDU. For example, the second apparatus may obtain data and the like included in the first PPDU, and a specific processing manner is not limited. S603 occurs, for example, after S602.

In this embodiment of this application, the transmit powers are reduced on the M subcarriers, so that a spectrum template corresponding to a PPDU bandwidth can be met when the PPDU bandwidth is greater than the distributed bandwidth of the DRU. The distributed bandwidth of the DRU may use a tone plan corresponding to the PPDU bandwidth when the PPDU bandwidth is equal to the distributed bandwidth, which helps simplify implementation of a device, and may also meet a requirement of a device that supports only 20 MHz on a DC subcarrier. That is, for a DRU of 20 MHz, a location of the DC subcarrier does not change, which meets a hardware requirement of the device that supports only 20 MHz. In addition, the DRU may still be distributed according to a tone plan when the PPDU bandwidth is the distributed bandwidth, except that one subcarrier of each DRU in a part of DRUs may be used as one of the M subcarriers, and a loss of information about one subcarrier may be caused for each DRU. However, compared with an rRU, the DRU loses only one subcarrier, that is, the loss is relatively small.

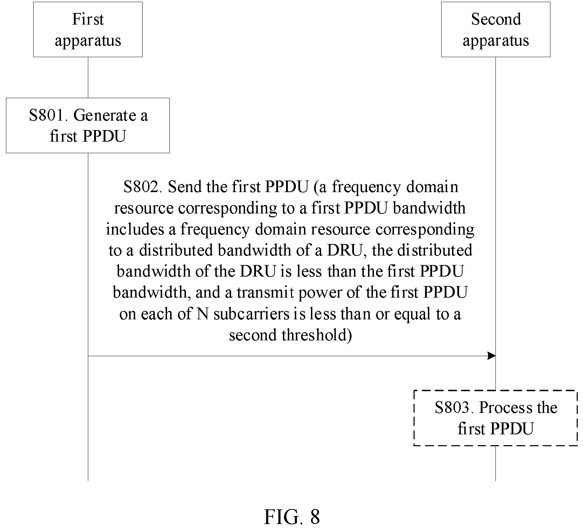

An embodiment of this application provides a second communication method. FIG. 8 is a flowchart of the method.

S801. A first apparatus generates a first PPDU. The first PPDU includes, for example, data, and may further include information such as a preamble. This is not limited.

S802. The first apparatus sends the first PPDU. Correspondingly, a second apparatus receives the first PPDU. A bandwidth of the first PPDU is referred to as a first PPDU bandwidth. A frequency domain resource corresponding to the first PPDU bandwidth includes a frequency domain resource corresponding to a distributed bandwidth of a DRU. The distributed bandwidth of the DRU is less than the first PPDU bandwidth. A transmit power of the first PPDU on each of N subcarriers is less than or equal to a second threshold. Descriptions are as follows.

For example, the frequency domain resource corresponding to the first PPDU bandwidth is referred to as a first frequency domain resource. The first frequency domain resource may include a DRU, and a distributed bandwidth of the DRU is less than the first PPDU bandwidth. For example, the distributed bandwidth is 20 MHz, and the first PPDU bandwidth is, for example, 40 MHz, 80 MHz, 160 MHz, or 320 MHz, or may be a larger bandwidth. This is not limited.

In this embodiment of this application, the DRU may be located at an edge of the first frequency domain resource, or may be located at a non-edge location of the first frequency domain resource. FIG. 4 is used as an example. The PPDU bandwidth in FIG. 4 is, for example, the first PPDU bandwidth. The DRU in FIG. 4 is, for example, located at the left edge or the right edge of the first frequency domain resource, where the left edge is a low frequency edge, and the right edge is a high frequency edge; or, the DRU in FIG. 4 is, for example, located at a non-edge location of the first frequency domain resource, for example, the third 20 MHz from left to right.

Refer to Table 3, an example of a distribution manner of the DRU in the first frequency domain resource. In Table 3, an example in which the distributed bandwidth of the DRU is 20 MHz is used.

**Table 3**

| PPDU bandwidth (index range) | Distribution range of the DRU within a bandwidth of 20 MHz corresponding to frequencies in an ascending order |
|---|---|
| 40 MHz ([-256, 255]) | [-244:-3], [3:244] |
| 80 MHz ([-512, 511)) | [-500:-259], [-253:-12], [12:253], [259:500] |
| 160 MHz ([-1024, 1023]) | [-1012:-771], [-765:-524], [-500:-259], [-253:-12], [12:253], [259:500], [524:765], [771:1012] |
| 320 MHz ([-2048, 2047]) | [-2036:-1795], [-1789:-1548], [-1524:-1283], [-1277:-1036], [-1012:-771], [-765:-524], [-500:-259], [-253:-12], [12:253], [259:500], [524:765], [771:1012], [1036:1277], [1283:1524], [1548:1789], [1795:2036] |

Parentheses in the first column of Table 3 represent a range of absolute indexes of subcarriers included in a corresponding bandwidth. For example, if the first PPDU bandwidth is 40 MHz, the first PPDU bandwidth may include all subcarriers with absolute indexes from -256 to 255. The second column in Table 3 represents absolute indexes of subcarriers included in each bandwidth of 20 MHz after a corresponding bandwidth is divided into bandwidths of 20 MHz. For example, if the first PPDU bandwidth is 40 MHz, the first PPDU bandwidth may be divided into two bandwidths of 20 MHz, where [-244:-3] represents a distribution range of the DRU in one bandwidth of 20 MHz, that is, the DRU may be distributed on subcarriers of [-244:-3] ([-244:-3] represents all subcarriers with absolute indexes from -244 to -3), and [3:244] represents a distribution range of the DRU in another bandwidth of 20 MHz, that is, the DRU may be distributed on subcarriers of [3:244] ([3:244] represents all subcarriers with absolute indexes from 3 to 244).

In this embodiment of this application, a quantity and distribution of guard tones corresponding to the distributed bandwidth of the DRU are, for example, the same as a quantity and distribution of the guard tones corresponding to the first PPDU bandwidth. Optionally, a quantity and distribution of guard tones corresponding to the distributed bandwidth of the DRU at an edge a may be the same as a quantity and distribution of guard tones corresponding to the first PPDU bandwidth at the same edge a. For example, this solution corresponds to a case in which the DRU is located at an edge of the frequency domain resource corresponding to the first PPDU bandwidth, and the edge a is, for example, the edge at which the DRU is located and that is of the frequency domain resource corresponding to the first PPDU bandwidth. For example, if the distributed bandwidth of the DRU is 20 MHz, and the first PPDU bandwidth is 80 MHz, the quantity and distribution of guard tones corresponding to the distributed bandwidth of the DRU are the same as a quantity and distribution of guard tones corresponding to 80 MHz.

For example, a reference bandwidth is 20 MHz, and the first PPDU bandwidth is 80 MHz. It can be learned from FIG. 1 that, for a bandwidth of 20 MHz, the two edges (for example, the left edge and the right edge shown in FIG. 1) include six guard tones and five guard tones respectively; and it can be learned from FIG. 3 that, for a bandwidth of 80 MHz, the two edges (for example, the left edge and the right edge shown in FIG. 3) include 12 guard tones and 11 guard tones respectively. In this embodiment of this application, if the DRU is located at the left edge of the first PPDU bandwidth, there may be 12 guard tones separately corresponding to the left edge of the distributed bandwidth of the DRU; or if the DRU is located at the right edge of the first PPDU bandwidth, there may be 11 guard tones separately corresponding to the right edge of the distributed bandwidth of the DRU. It is equivalent to that, in this embodiment of this application, a distribution solution of guard tones corresponding to a relatively large PPDU bandwidth is used for a relatively small distributed bandwidth. In this case, even if the DRU is located at an edge of the first frequency domain resource, the guard tones included in the DRU can still meet a spectrum template corresponding to the first PPDU bandwidth.

Optionally, a tone plan corresponding to the distributed bandwidth of the DRU may be different from a tone plan corresponding to the first PPDU bandwidth. However, in this embodiment of this application, the quantity and distribution of guard tones corresponding to the distributed bandwidth of the DRU may be the same as the quantity and distribution of guard tones corresponding to the first PPDU bandwidth, or it is understood as that a guard tone solution corresponding to the distributed bandwidth of the DRU is the same as a guard tone solution corresponding to the first PPDU bandwidth. Optionally, the DRU may be mapped or distributed in subcarriers included in a 242-tone rRU in the frequency domain resource corresponding to the first PPDU bandwidth, so that the guard tones corresponding to the distributed bandwidth of the DRU can meet a requirement of the tone plan corresponding to the first PPDU bandwidth. A bandwidth of the 242-tone rRU is, for example, 20 MHz. In addition, for a corresponding device, mapping or distribution may also be performed based on the subcarriers included in the 242-tone rRU in the frequency domain resource corresponding to the first PPDU bandwidth, which is equivalent to performing mapping or distribution in a set mapping or discretization manner.

In this embodiment of this application, the guard tone solution corresponding to the distributed bandwidth of the DRU is changed, which may cause a change in a location of a DC subcarrier corresponding to the distributed bandwidth of the DRU. For example, in a tone plan corresponding to a PPDU bandwidth when the PPDU bandwidth is equal to the distributed bandwidth, a DC subcarrier is located at a location of a center frequency of the distributed bandwidth. For example, the distributed bandwidth is 20 MHz. Refer to FIG. 1. Three or seven DC subcarriers are included in the middle of the bandwidth of 20 MHz. However, if the guard tone solution corresponding to the distributed bandwidth is changed, for example, the first PPDU bandwidth is 80 MHz, which is equivalent to that a distributed bandwidth of 20 MHz uses a guard tone solution corresponding to a bandwidth of 80 MHz, for a tone plan corresponding to the bandwidth of 80 MHz, a DC subcarrier is located at a location of a center frequency location of the bandwidth of 80 MHz (refer to FIG. 3), and has exceeded a bandwidth range of 20 MHz. For example, a device that supports only 20 MHz cannot support a DC subcarrier whose location is changed.

Therefore, in this embodiment of this application, when the first apparatus sends the first PPDU, the transmit power of the first PPDU on each of the N subcarriers may be less than or equal to the second threshold, and N is a positive integer. The N subcarriers may be located in a frequency range of the center frequency of the distributed bandwidth of the DRU. Alternatively, the N subcarriers are located in a frequency range which may include the center frequency of the distributed bandwidth of the DRU. For example, it is understood as that, in this embodiment of this application, the N subcarriers may be enabled to approximately implement function of the DC subcarriers. Optionally, the N subcarriers may be considered as DC subcarriers corresponding to the distributed bandwidth of the DRU. For example, after the distributed bandwidth of the DRU uses the guard tone solution corresponding to the first PPDU bandwidth, the distributed bandwidth of the DRU may correspond to the N DC subcarriers. Alternatively, the N subcarriers are not considered as DC subcarriers corresponding to the distributed bandwidth of the DRU, but can approximately implement the functions of the DC subcarriers. In this case, it may be considered that after the distributed bandwidth of the DRU uses the guard tone solution corresponding to the first PPDU bandwidth, the distributed bandwidth of the DRU has no corresponding DC subcarrier, or DC subcarriers corresponding to the distributed bandwidth of the DRU are not in the distributed bandwidth of the DRU.

For example, the second threshold is predefined according to a protocol, or is determined by the first apparatus, or is determined by the first apparatus and the second apparatus through negotiation, or is pre-configured in the first apparatus and the second apparatus. Optionally, the second threshold may be greater than or equal to 0.

Optionally, in the N subcarriers, transmit powers of the first PPDU on different subcarriers may be equal. For example, the transmit power of the first PPDU on each of the N subcarriers is equal to a first threshold, and the first threshold is, for example, 0. In this case, the N subcarriers are equivalent to implementing the functions of the DC subcarriers. Alternatively, in the N subcarriers, the transmit powers of the first PPDU on different subcarriers may be unequal. This is not limited.

A frequency range in which the N subcarriers are located may include the center frequency of the distributed bandwidth of the DRU, or include a subcarrier corresponding to the center frequency (that is, a frequency of the subcarrier is the center frequency). For example, the frequency range includes only the subcarrier corresponding to the center frequency, and does not include a subcarrier corresponding to another frequency. In this case, N may be equal to 1. In this manner, a subcarrier is similar to implementing a function of a DC subcarrier, and more subcarriers may be reserved for data transmission.

Alternatively, optionally, in addition to the center frequency, the frequency range may further include another frequency, for example, further include one or more frequencies centered on the center frequency, or further include one or more frequencies adjacent to the center frequency. Alternatively, in addition to the subcarrier corresponding to the center frequency, the frequency range may further include a subcarrier corresponding to another frequency, for example, further include subcarriers corresponding to one or more frequencies centered on the center frequency, or further include subcarriers corresponding to one or more frequencies adjacent to the center frequency. In this case, N may be greater than 1, and frequencies of the N subcarriers are frequencies in the frequency range. N may be less than or equal to a quantity of subcarriers included in the frequency range; and/or a quantity of frequencies corresponding to the N subcarriers may be less than or equal to a quantity of frequencies included in the frequency range. For example, the distributed bandwidth of the DRU is 20 MHz, and N may be 7. Because according to the tone plan corresponding to the bandwidth of 20 MHz shown in FIG. 1, there may be seven DC subcarriers, N may also be set to 7 in this embodiment of this application, to be as close as possible to the tone plan corresponding to the PPDU bandwidth when the PPDU bandwidth is equal to the distributed bandwidth, thereby simplifying implementation of a device.

Optionally, for example, if the distributed bandwidth of the DRU includes subcarriers in [a:b] (for example, [a:b] includes absolute indexes of the subcarriers, that is, the distributed bandwidth of the DRU includes all subcarriers between a subcarrier whose absolute index is a and a subcarrier whose absolute index is b, and also includes the subcarrier whose absolute index is a and the subcarrier whose absolute index is b), an index of the subcarrier corresponding to the center frequency of the distributed bandwidth is $\frac{a + b + 1}{2}$. The frequency range in which the N subcarriers are located is, for example, $\left[\frac{a + b + 1}{2}-c:\frac{a + b + 1}{2}+d\right]$, that is, the frequency range includes all subcarriers between a subcarrier whose absolute index is ( $\frac{a + b + 1}{2} - c$) and a subcarrier whose absolute index is ( $\frac{a + b + 1}{2} + d$), and also includes the subcarrier whose absolute index is ( $\frac{a + b + 1}{2} - c$) and the subcarrier whose absolute index is ( $\frac{a + b + 1}{2} + d$). c and d are constants, and c may be greater than d, less than d, or equal to d. For example, if N=7, c=d=3.

For example, refer to Table 4, some examples of locations of the N subcarriers in the distributed bandwidth of the DRU. In Table 4, an example in which the distributed bandwidth of the DRU is 20 MHz and N=7 is used.

**Table 4**

| PPDU bandwidth (index range) | Subcarrier range of 20 MHz and reserved DC location corresponding to frequencies in an ascending order |
|---|---|
| 40 MHz ([-256, 255]) | [-256:-1], [0:255] |
| | [-131:-125], [125, 131] |
| 80 MHz ([-512, 511)) | [-512:-257], [-256:-1], [0:255], [256:511] |
| | [-387:-381], [-131:-125], [125:131], [381:387] |
| 160 MHz ([-1024, 1023]) | [-1024:-769], [-768:-513], [-512:-257], [-256:-1], [0:255], [256:511], [512:767], [768:1023] |
| | [-899:-893], [-387:-381], [-131:-125], [125:131], [381:387], [765:771], [637:643], [893:899] |
| 320 MHz ([-2048, 2047]) | [-2048:-1793], [-1792:-1537], [-1536:-1281], [-1280:-1025], [-1024:-769], [-768:-513], [-512:-257], [-256:-1], [0:255], [256:511], [512:767], [768:1023], [1024:1279], [1280:1535], [1536:1791], [1792:2047] |
| | [-1923:-1917], [-1667:-1661], [-1411:-1405], [-1155:-1149], [-899:-893], [-643:-637], [-387:-381], [-131:-125], [125:131], [381:387], [637:643], [893:899], [1149:1155], [1405:1411], [1661:1667], [1917:1923] |

Parentheses in the first column of Table 4 represent a range of absolute indexes of subcarriers included in a corresponding bandwidth. For example, if the first PPDU bandwidth is 40 MHz, the first PPDU bandwidth may include all subcarriers with absolute indexes from -256 to 255. In the second column in Table 4, a first row corresponding to a PPDU bandwidth represents absolute indexes of subcarriers included in each bandwidth of 20 MHz after the PPDU bandwidth is divided into bandwidths of 20 MHz. For example, if the first PPDU bandwidth is 40 MHz, the first PPDU bandwidth may be divided into two bandwidths of 20 MHz. In the first row corresponding to 40 MHz, [-256:-1] represents absolute indexes of subcarriers included in a bandwidth of 20 MHz (the bandwidth of 20 MHz includes all subcarriers with absolute indexes from -256 to -1), and [0:255] represents absolute indexes of subcarriers included in another bandwidth of 20 MHz (the bandwidth of 20 MHz includes all subcarriers with absolute indexes from 0 to 255).

In addition, in the second column of Table 4, a second row corresponding to a PPDU bandwidth represents absolute indexes of N subcarriers in a corresponding bandwidth of 20 MHz, where ranges in the first row corresponding to a PPDU bandwidth and ranges in the second row are in a one-to-one correspondence according to a sequence. For example, [-256:-1] in the first row corresponding to a PPDU bandwidth of 40 MHz corresponds to [-131:-125] in the second row, indicating that if the distributed bandwidth of the DRU is within 20 MHz shown by [-256:-1], a frequency range in which the N subcarriers are located may include all subcarriers with absolute indexes from -131 to -125; and [0:255] in the first row corresponding to the PPDU bandwidth of 40 MHz corresponds to [125,131] in the second row, indicating that if the distributed bandwidth of the DRU is within 20 MHz shown by [0:255], the frequency range in which the N subcarriers are located may include all subcarriers with absolute indexes from 125 to 131.

As an optional implementation, the N subcarriers may be all or a part of null subcarriers included in the frequency domain resource corresponding to the distributed bandwidth of the DRU. Even if the distributed bandwidth of the DRU uses the guard tone solution corresponding to the first PPDU bandwidth, there are corresponding null subcarriers. In this case, in this embodiment of this application, a part or all of these null subcarriers may be used as the N subcarriers. In this way, the distributed bandwidth of the DRU has corresponding null subcarriers, and more subcarriers (for example, original locations of these null subcarriers may be replaced with other subcarriers) can be reserved for data transmission. For example, the distributed bandwidth of the DRU is 20 MHz. For example, the distributed bandwidth includes two 106-tone RUs and one 26-tone RU, and includes 238 subcarriers and four null subcarriers in total. In this case, the four null subcarriers may be used as the N subcarriers in this embodiment of this application. In this case, N=4, and the four null subcarriers may be set within a frequency range of a center frequency of the distributed bandwidth of 20 MHz . For example, the frequency range is [-3,3], indicating that the frequency range includes all subcarriers with absolute indexes from -3 to 3, and absolute indexes of the four null subcarriers are, for example, {-2, -1, 0, 1} in the frequency range.

Optionally, this embodiment of this application and the embodiment shown in FIG. 6 may be separately applied, or may be applied in combination. If this embodiment of this application and the embodiment shown in FIG. 6 are applied in combination, a combination manner is, for example, that the method shown in FIG. 6 may also be used for the guard tones corresponding to the distributed bandwidth of the DRU in this embodiment of this application. For example, transmit powers of the first PPDU on K subcarriers may be less than or equal to a third threshold, the K subcarriers may include a part or all of the guard tones corresponding to the distributed bandwidth of the DRU, and K is a positive integer. If the distributed bandwidth of the DRU is less than the first PPDU bandwidth, the distributed bandwidth of the DRU also has a frequency edge. In this case, in this embodiment of this application, a function of a guard tone may be similarly implemented at the frequency edge of the distributed bandwidth of the DRU by using the K subcarriers, to reduce out-of-band leakage. For example, if the DRU is located at a high frequency edge of the frequency domain resource corresponding to the first PPDU bandwidth (refer to FIG. 7B), the K subcarriers may be located at a low frequency edge of the distributed bandwidth of the DRU (in this case, a quantity of guard tones corresponding to the low frequency edge of the distributed bandwidth of the DRU is the same as a quantity of guard tones corresponding to a high frequency edge of the first PPDU bandwidth); or, if the DRU is located at a low frequency edge of the frequency domain resource corresponding to the first PPDU bandwidth (refer to FIG. 7A), the K subcarriers may be located at a high frequency edge of the distributed bandwidth of the DRU (in this case, the quantity of guard tones corresponding to the low frequency edge of the distributed bandwidth of the DRU is the same as a quantity of guard tones corresponding to a low frequency edge of the first PPDU bandwidth); or, if the DRU is located at a non-edge location of the frequency domain resource corresponding to the first PPDU bandwidth, the K subcarriers may be located at the high frequency edge or the low frequency edge of the distributed bandwidth of the DRU.

For example, the third threshold is predefined according to a protocol, or is determined by the first apparatus, or is determined by the first apparatus and the second apparatus through negotiation, or is pre-configured in the first apparatus and the second apparatus. Optionally, the third threshold may be greater than or equal to 0. Optionally, the third threshold and the first threshold shown in FIG. 6 may be a same threshold, or may be different thresholds. If the two thresholds are different, the first threshold may be equal to or not equal to the third threshold.

Optionally, in the K subcarriers, transmit powers of the first PPDU on different subcarriers may be equal. For example, a transmit power of the first PPDU on each of the K subcarriers is equal to the third threshold, and the third threshold is, for example, 0. In this case, out-of-band leakage can be better reduced.

Alternatively, in the K subcarriers, the transmit powers of the first PPDU on different subcarriers may be unequal. For example, an optional manner is that a transmit power of the first PPDU on a second subcarrier in the K subcarriers is inversely proportional to or negatively correlated with a second difference, where the second difference is a frequency difference between a frequency of the second subcarrier and a center frequency of the distributed bandwidth of the DRU. Alternatively, a transmit power of the first PPDU on a subcarrier with a larger frequency difference between a frequency of the subcarrier and the center frequency of the distributed bandwidth of the DRU is smaller. This manner may be understood as that in the K subcarriers, a subcarrier with a larger frequency difference between a frequency of the subcarrier and the center frequency of the distributed bandwidth of the DRU is closer to an outer side of the first PPDU bandwidth, so that transmit powers on these subcarriers are relatively low, and out-of-band leakage can be better reduced.

Optionally, this embodiment of this application may further include S803: The second apparatus processes the first PPDU. For example, the second apparatus may obtain data and the like included in the first PPDU, and a specific processing manner is not limited. S803 occurs, for example, after S802.

In this embodiment of this application, the distributed bandwidth of the DRU may use a guard tone solution corresponding to a PPDU bandwidth, which can meet a requirement on a quantity of guard tones corresponding to the PPDU bandwidth, and ensure that a uniform tone plan can be used for the distributed bandwidth of the DRU and the PPDU bandwidth regardless of a value of the distributed bandwidth of the DRU. In addition, in this embodiment of this application, a function of a DC subcarrier on the distributed bandwidth of the DRU is further approximately implemented by using the N subcarriers, to resolve a problem that the distributed bandwidth of the DRU lacks a DC subcarrier after the guard tone solution is changed. In this embodiment of this application, the DRU may be mapped or distributed in subcarriers included in a 242-tone rRU in the frequency domain resource corresponding to the first PPDU bandwidth, so that the guard tones corresponding to the distributed bandwidth of the DRU can meet a requirement of the tone plan corresponding to the first PPDU bandwidth. For a corresponding device, mapping or distribution may also be performed based on the subcarriers included in the 242-tone rRU in the frequency domain resource corresponding to the first PPDU bandwidth, which is equivalent to performing mapping or distribution in a set mapping or discretization manner. The DRU may be mapped or distributed based on the subcarriers included in the 242-tone rRU in the frequency domain resource corresponding to the first PPDU bandwidth, except that one subcarrier of each DRU in a part of DRUs may be used as one of the N subcarriers, and a loss of information about one subcarrier may be caused for each DRU. However, compared with an rRU, the DRU loses only one subcarrier, that is, the loss is relatively small.

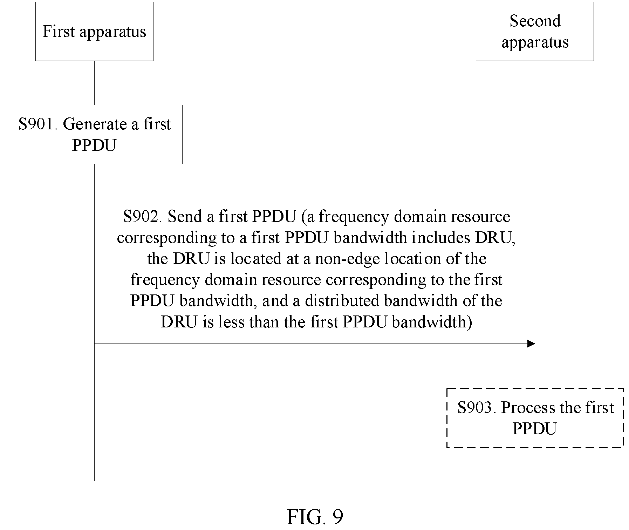

An embodiment of this application provides a third communication method. FIG. 9 is a flowchart of the method.

S901. A first apparatus generates a first PPDU. The first PPDU includes, for example, data, and may further include information such as a preamble. This is not limited.

S902. The first apparatus sends the first PPDU according to a predefined rule. Correspondingly, a second apparatus receives the first PPDU according to the predefined rule. For example, a bandwidth of the first PPDU is referred to as a first PPDU bandwidth. A frequency domain resource corresponding to the first PPDU bandwidth includes a DRU, the DRU is located at a non-edge location of the frequency domain resource corresponding to the first PPDU bandwidth, and a distributed bandwidth of the DRU is less than the first PPDU bandwidth. Descriptions are as follows.

The predefined rule is, for example, a protocol-predefined rule. The predefined rule is, for example, that when a PPDU bandwidth is greater than a distributed bandwidth of a DRU, the DRU is located at a non-edge location of a frequency domain resource corresponding to the PPDU bandwidth; or the predefined rule is, for example, that when a PPDU bandwidth is greater than a distributed bandwidth of a DRU, the DRU is not located at an edge of a frequency domain resource corresponding to the PPDU bandwidth. It may be understood that, a DRU with a relatively small distributed bandwidth is allowed at a non-edge location of a PPDU with a relatively large bandwidth, but the DRU with the relatively small distributed bandwidth is not allowed at an edge of the PPDU with the relatively large bandwidth.

In this manner, optionally, a tone plan corresponding to the distributed bandwidth of the DRU may be a tone plan corresponding to the PPDU bandwidth when the PPDU bandwidth is equal to the distributed bandwidth. The tone plan corresponding to the PPDU bandwidth when the PPDU bandwidth is equal to the distributed bandwidth of the DRU may be understood as that a bandwidth of a PPDU is equal to a reference bandwidth, the bandwidth of the PPDU is referred to as a PPDU bandwidth, and a tone plan corresponding to this PPDU bandwidth is the tone plan corresponding to the PPDU bandwidth when the PPDU bandwidth is equal to the distributed bandwidth of the DRU. For example, the distributed bandwidth of DRU is 20 MHz. It can be learned from FIG. 1 that for a bandwidth of 20 MHz, two edges (for example, the left edge and the right edge shown in FIG. 1) include six guard tones and five guard tones respectively. In this case, in this embodiment of this application, two edges of the distributed bandwidth of the DRU may also correspond to six guard tones and five guard tones respectively. Because the DRU is not located at the edge of the frequency domain resource corresponding to the PPDU bandwidth, a requirement on a quantity of guard tones corresponding to the PPDU bandwidth does not need to be met. Even if the distributed bandwidth of the DRU uses the tone plan corresponding to the PPDU bandwidth when the PPDU bandwidth is equal to the distributed bandwidth of the DRU, a requirement of the PPDU bandwidth on the guard tones is not affected.

The first apparatus may send the first PPDU according to the predefined rule. For example, if the frequency domain resource corresponding to the first PPDU bandwidth includes the DRU, and the distributed bandwidth of the DRU is less than the first PPDU bandwidth, the DRU may be located at the non-edge location of the frequency domain resource corresponding to the first PPDU bandwidth, but not at an edge of the frequency domain resource corresponding to the first PPDU bandwidth, to comply with the predefined rule. Correspondingly, the second apparatus receives the first PPDU according to the predefined rule. According to the predefined rule, the second apparatus can determine that the DRU may be located at the non-edge location of the frequency domain resource corresponding to the first PPDU bandwidth, but not at the edge of the frequency domain resource corresponding to the first PPDU bandwidth.

For example, the distributed bandwidth of the DRU is 20 MHz, and the first PPDU bandwidth is, for example, 40 MHz, 80 MHz, 160 MHz, or 320 MHz, or may be a larger bandwidth. This is not limited.

Optionally, this embodiment of this application may further include S903: The second apparatus processes the first PPDU. For example, the second apparatus may obtain data and the like included in the first PPDU, and a specific processing manner is not limited. S903 occurs, for example, after S902.

In this embodiment of this application, a protocol-predefined rule is added, which is equivalent to increasing a limitation on a sending and receiving process, thereby simplifying implementation of a device.

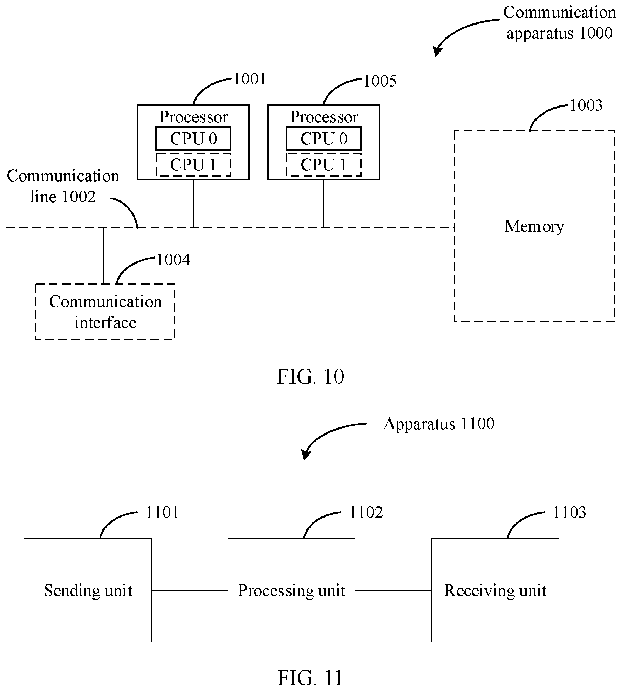

FIG. 10 is a diagram of a structure of a communication apparatus according to an embodiment of this application. The communication apparatus 1000 may be the first apparatus in the embodiment shown in any one of FIG. 6, FIG. 8, or FIG. 9, and is configured to implement the method corresponding to the first apparatus in the foregoing method embodiments. Alternatively, the communication apparatus 1000 may be the second apparatus in the embodiment shown in any one of FIG. 6, FIG. 8, or FIG. 9, and is configured to implement the method corresponding to the second apparatus in the foregoing method embodiments. The first apparatus is, for example, an AP or a STA, or a circuit system disposed in an AP or a STA, or a relatively large device including an AP or a STA. The second apparatus is, for example, an AP or a STA, or a circuit system disposed in an AP or a STA, or a relatively large device including an AP or a STA. For example, a circuit system is a chip system.

The communication apparatus 1000 includes at least one processor 1001. The processor 1001 may be configured for internal processing of the apparatus, to implement a specific control processing function. Optionally, the processor 1001 includes instructions. Optionally, the processor 1001 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1000 includes one or more memories 1003, configured to store instructions. Optionally, the memory 1003 may further store data. The processor and the memory may be separately disposed, or may be integrated together.

Optionally, the communication apparatus 1000 includes a communication line 1002 and at least one communication interface 1004. The memory 1003, the communication line 1002, and the communication interface 1004 are all optional, and therefore are all represented by dashed lines in FIG. 10.

Optionally, the communication apparatus 1000 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 1000 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1001 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1002 may include a path for transmission of information between the foregoing components.

The communication interface 1004 may be any apparatus like a transceiver, and is configured to communicate with another device or a communication network, such as Ethernet, a radio access network (radio access network, RAN), a wireless local area network (wireless local area network, WLAN), or a wired access network.

The memory 1003 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a Blu-ray disc, and the like), a magnetic disk storage medium or another magnetic storage device, or any other medium that can carry or store expected program code in an instruction or data structure form and can be accessed by a computer, but is not limited thereto. The memory 1003 may exist independently, and is connected to the processor 1001 through the communication line 1002. Alternatively, the memory 1003 may be integrated with the processor 1001.

The memory 1003 is configured to store computer-executable instructions for executing the solutions of this application, and the processor 1001 controls the execution. The processor 1001 is configured to execute the computer-executable instructions stored in the memory 1003, to implement the steps performed by the first apparatus or the second apparatus in the embodiment shown in any one of FIG. 6, FIG. 8, or FIG. 9.

Optionally, the computer-executable instructions in this embodiment of this application may also be referred to as application program code. This is not specifically limited in this embodiment of this application.

During specific implementation, in an embodiment, the processor 1001 may include one or more CPUs such as a CPU 0 and a CPU 1 in FIG. 10.

During specific implementation, in an embodiment, the communication apparatus 1000 may include a plurality of processors such as the processor 1001 and a processor 1005 in FIG. 10. Each of the processors may be a single-CPU (single-CPU) processor, or may be a multi-CPU (multi-CPU) processor. The processor herein may be one or more devices, circuits, and/or processing cores configured to process data (for example, computer program instructions).

When the apparatus shown in FIG. 10 is a chip, for example, the first apparatus is a chip of a STA or a chip of an AP, and/or the second apparatus is a chip of a STA or a chip of an AP, the chip includes the processor 1001 (which may further include the processor 1005), the communication line 1002, and the communication interface 1004. Optionally, the chip may include the memory 1003. Specifically, the communication interface 1004 may be an input interface, a pin, a circuit, or the like. The memory 1003 may be a register, a cache, or the like. The processor 1001 and the processor 1005 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each functional module is obtained through division based on each corresponding function, FIG. 11 is a diagram of an apparatus. The apparatus 1100 may be the first apparatus or the second apparatus in the foregoing method embodiments. The apparatus 1100 includes a sending unit 1101, a processing unit 1102, and a receiving unit 1103.

It should be understood that the apparatus 1100 may be configured to implement the steps performed by the first apparatus or the second apparatus in the communication methods in embodiments of this application. For related features, refer to the embodiment shown in any one of FIG. 6, FIG. 8, or FIG. 9. Details are not described herein again.

Optionally, functions/implementation processes of the sending unit 1101, the receiving unit 1103, and the processing unit 1102 in FIG. 11 may be implemented by the processor 1001 in FIG. 10 by invoking the computer-executable instructions stored in the memory 1003. Alternatively, a function/an implementation process of the processing unit 1102 in FIG. 11 may be implemented by the processor 1001 in FIG. 10 by invoking the computer-executable instructions stored in the memory 1003, and functions/implementation processes of the sending unit 1101 and the receiving unit 1103 in FIG. 11 may be implemented through the communication interface 1004 in FIG. 10.

Optionally, when the apparatus 1100 is a chip or a circuit, the functions/implementation processes of the sending unit 1101 and the receiving unit 1103 may alternatively be implemented through a pin, a circuit, or the like.

This application further provides a computer-readable storage medium. The computer-readable storage medium stores a computer program or instructions. When the computer program or the instructions are run, the method performed by the first apparatus or the second apparatus in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code runs on a computer, the computer is caused to perform the method performed by the first apparatus or the second apparatus in any one of the foregoing method embodiments.

An embodiment of this application further provides a processing apparatus, including a processor and an interface. The processor is configured to perform the method performed by the first apparatus or the second apparatus in any one of the foregoing method embodiments.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state disk, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and write information to the storage medium. Alternatively, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logic conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the first apparatus and/or the second apparatus may perform a part or all of steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

## Claims

1. A communication method, wherein the method comprises:
generating a first physical layer protocol data unit PPDU; and
sending the first PPDU, wherein a frequency domain resource corresponding to a first PPDU bandwidth comprises a frequency domain resource corresponding to a reference bandwidth, the frequency domain resource corresponding to the reference bandwidth is located at an edge of the frequency domain resource corresponding to the first PPDU bandwidth, the reference bandwidth is less than the first PPDU bandwidth, and the first PPDU bandwidth is a bandwidth of the first PPDU, wherein a transmit power of the first PPDU on each of M subcarriers is less than or equal to a first threshold, the M subcarriers belong to guard tones corresponding to the first PPDU bandwidth and do not belong to guard tones corresponding to the reference bandwidth, and M is a positive integer.

2. A communication method, wherein the method comprises:
receiving the first PPDU, wherein a frequency domain resource corresponding to a first PPDU bandwidth comprises a frequency domain resource corresponding to a reference bandwidth, the frequency domain resource corresponding to the reference bandwidth is located at an edge of the frequency domain resource corresponding to the first PPDU bandwidth, the reference bandwidth is less than the first PPDU bandwidth, and the first PPDU bandwidth is a bandwidth of the first PPDU, wherein a transmit power of the first PPDU on each of M subcarriers is less than or equal to a first threshold, the M subcarriers belong to guard tones corresponding to the first PPDU bandwidth and do not belong to guard tones corresponding to the reference bandwidth, and M is a positive integer.

3. The method according to claim 1 or 2, wherein the frequency domain resource corresponding to the reference bandwidth comprises a distributed resource unit DRU.

4. The method according to any one of claims 1 to 3, wherein
the reference bandwidth is 20 MHz;
the first PPDU bandwidth is 40 MHz, 80 MHz, 160 MHz, or 320 MHz.

5. The method according to claim 4, wherein M is less than or equal to 6.

6. The method according to any one of claims 1 to 5, wherein
a highest frequency corresponding to the reference bandwidth is the same as a highest frequency corresponding to the first PPDU bandwidth; or,
a lowest frequency corresponding to the reference bandwidth is the same as a lowest frequency corresponding to the first PPDU bandwidth.

7. The method according to any one of claims 1 to 6, wherein
transmit powers of the first PPDU on different subcarriers in the M subcarriers are equal; or,
a transmit power of the first PPDU on a first subcarrier in the M subcarriers is inversely proportional to a frequency difference between a frequency of the first subcarrier and a center frequency of the reference bandwidth.

8. The method according to claim 7, wherein transmit powers of the first PPDU on the M subcarriers are equal to the first threshold, and the first threshold is 0.

9. A communication method, wherein the method comprises:
generating a first physical layer protocol data unit PPDU; and
sending the first PPDU, wherein a frequency domain resource corresponding to a first PPDU bandwidth comprises a distributed resource unit DRU, a distributed bandwidth of the DRU is less than the first PPDU bandwidth, and the first PPDU bandwidth is a bandwidth of the first PPDU, wherein a transmit power of the first PPDU on each of N subcarriers is less than or equal to a second threshold, the N subcarriers are located in a frequency range of a center frequency of the distributed bandwidth of the DRU, and N is a positive integer.

10. A communication method, wherein the method comprises:
receiving a first PPDU, wherein a frequency domain resource corresponding to a first PPDU bandwidth comprises a DRU, a distributed bandwidth of the DRU is less than the first PPDU bandwidth, and the first PPDU bandwidth is a bandwidth of the first PPDU, wherein a transmit power of the first PPDU on each of N subcarriers is less than or equal to a second threshold, the N subcarriers are located in a frequency range of a center frequency of the distributed bandwidth of the DRU, and N is a positive integer.

11. The method according to claim 9 or 10, wherein
a quantity of guard tones corresponding to the distributed bandwidth of the DRU is equal to a quantity of guard tones corresponding to the first PPDU bandwidth.

12. The method according to any one of claims 9 to 11, wherein
the frequency range comprises only the center frequency, N=1, and the N subcarriers are subcarriers corresponding to the center frequency of the distributed bandwidth of the DRU; or,
the frequency range comprises the center frequency and another frequency other than the center frequency, N>1, and the N subcarriers comprise a subcarrier corresponding to the center frequency of the distributed bandwidth of the DRU.

13. The method according to any one of claims 9 to 12, wherein the N subcarriers are a part or all of null subcarriers comprised in a frequency domain resource corresponding to the distributed bandwidth of the DRU.

14. The method according to any one of claims 9 to 13, wherein the transmit power of the first PPDU on each of the N subcarriers is equal to the second threshold, and the second threshold is 0.

15. The method according to any one of claims 9 to 14, wherein transmit powers of the first PPDU on K subcarriers are less than or equal to a third threshold, the K subcarriers comprise a guard tone corresponding to the distributed bandwidth of the DRU, and K is a positive integer.

16. The method according to claim 15, wherein
the distributed bandwidth of the DRU is 20 MHz; and
the first PPDU bandwidth is 40 MHz, 80 MHz, 160 MHz, or 320 MHz.

17. The method according to claim 16, wherein
K is less than or equal to 5, or K is less than or equal to 6.

18. The method according to any one of claims 15 to 17, wherein
transmit powers of the first PPDU on different subcarriers in the K subcarriers are equal; or,
a transmit power of the first PPDU on a second subcarrier in the K subcarriers is inversely proportional to (or negatively correlated with) a frequency difference between a frequency of the second subcarrier and a center frequency of the distributed bandwidth of the DRU.

19. The method according to claim 18, wherein the transmit powers of the first PPDU on the K subcarriers are equal to the third threshold, and the third threshold is 0.

20. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 8, or cause the communication apparatus to perform the method according to any one of claims 9 to 19.

21. A computer-readable storage medium, wherein the computer-readable storage medium is configured to store a computer program, and when the computer program runs on a computer, the computer is caused to perform the method according to any one of claims 1 to 8, or the computer is caused to perform the method according to any one of claims 9 to 19.

22. A computer program product, wherein the computer program product comprises a computer program, and when the computer program runs on a computer, the computer is caused to perform the method according to any one of claims 1 to 8, or the computer is caused to perform the method according to any one of claims 9 to 19.

23. A chip system, wherein the chip system comprises:
a processor and an interface, wherein the processor is configured to invoke instructions from the interface and run the instructions, and when the processor executes the instructions, the method according to any one of claims 1 to 8 is implemented, or the method according to any one of claims 9 to 19 is implemented.
